# EUROPÄISCHE PATENTANMELDUNG

(11) **EP 4 567 757 A1**
(43) Veröffentlichungstag der Anmeldung: **11.06.2025**
(21) Anmeldenummer: 24216772.4
(22) Anmeldetag: 02.12.2024
(51) Int. Cl.: G07C 9/00

(54) **VERFAHREN UND VORRICHTUNG ZUM FESTSTELLEN, OB EINE INFORMATION ZUM ZUGANG ZU EINEM FACH EINER FACHANLAGE BERECHTIGT**

(30) Priorität: 04.12.2023 DE 102023133858
(71) Anmelder: Deutsche Post AG, 53113 Bonn (DE)
(72) Erfinder: Helferich, Frank, 53547 Leubsdorf (DE); Reichwald, Frank, 53842 Troisdorf (DE)
(74) Vertreter: Cohausz & Florack

(57) **Zusammenfassung**

Offenbart wird u.a. ein Verfahren, beispielsweise durchgeführt an einer ersten Vorrichtung (1), das Verfahren umfassend: Erhalten einer ersten Information von einer zweiten Vorrichtung (2), wobei die erste Information mit der zweiten Vorrichtung (2) assoziiert ist, Authentifizieren der zweiten Vorrichtung (2) basierend auf zumindest der ersten Information; Erzeugen einer zweiten Information, wobei unter Verwendung der zweiten Information eine dritte, von der zweiten Vorrichtung verschiedene Vorrichtung (3) oder ein Nutzer (5) der dritten Vorrichtung (3) Zugang zu einem oder mehreren Fächern einer Fachanlage (4) erhalten kann; und Ausgeben der zweiten Information, wobei ein positives Ergebnis des Authentifizierens der zweiten Vorrichtung (2) notwendige Bedingung für das Ausgeben der zweiten Information ist Drei zugehörige Verfahren, eines beispielsweise durchgeführt an der zweiten Vorrichtung (2), eines beispielsweise durchgeführt an der dritten Vorrichtung (3) und eines beispielsweise durchgeführt an der Fachanlage (4) in einem System mit der ersten (1), zweiten (2) und dritten Vorrichtung (3) werden ebenfalls offenbart Darüber hinaus werden entsprechende Vorrichtungen, Systeme und Computerprogramme zur jeweiligen Ausführung und/oder Steuerung der offenbarten Verfahren offenbart

## Beschreibung

### Gebiet

Beispielhafte Ausführungsformen der Erfindung betreffen Verfahren, Vorrichtungen, Systeme und Computerprogramme zum Authentifizieren eines Benutzers einer Fachanlage, wobei es sich bei der Fachanlage insbesondere um eine Fachanlage zum Versenden und/oder Empfangen von Sendungen und/oder zum Einlegen und/oder Entnehmen von Objekten handelt, und wobei die Fachanlage insbesondere durch mehrere Unternehmen anteilig genutzt und/oder verwaltet wird.

### Hintergrund

Fachanlagen finden beispielsweise in Form von Schließfach- oder Paketfachanlagen mannigfaltig Anwendung. Ein Beispiel für eine Paketfachanlage ist die Packstation der Anmelderin, in die sich ein Empfänger Sendungen liefern lassen kann. Die Sendung wird vom Zusteller in ein Fach einer in der Nähe des Empfängers befindlichen und/oder von dem Empfänger zuvor festgelegten Packstation eingelegt, das Fach verschlossen und der Empfänger entsprechend benachrichtigt Damit der benachrichtigte Empfänger eine für ihn bereitgestellte Sendung aus einem Fach der Fachanlage entnehmen kann, muss die Fachanlage feststellen, dass der Empfänger berechtigt ist, zu einem oder mehreren Fächern der Fachanlage Zugang zu erhalten.

### Zusammenfassung einiger beispielhafter Ausführungsformen der Erfindung

In Bezug auf eine Fachanlage ist es grundsätzlich erstrebenswert, dass diese zuverlässig, effizient, robust und sicher feststellen kann, dass ein Benutzer berechtigt ist, zu einem oder mehreren Fächern der Fachanlage Zugang zu erhalten, um anschließend den Zugang zu den entsprechenden Fächern zu gewähren.

Zudem ist eine flexible Nutzung einer Fachanlage wünschenswert, sodass z.B. nicht nur die Betreiberin, die eine Vielzahl von Fachanlagen verwaltet, sondern auch Partnerunternehmen mit verschiedenen Vorrichtungen oder Systemen, z.B. unterschiedliche Liefer- oder Zustelldienste, Online-Händler oder lokale Dienstleister (beispielsweise Handwerker), Zugang für Fächer einer Fachanlage ermöglichen können. So können beispielsweise Fächer langfristig an das Partnerunternehmen vermietet werden, welches dann selbständig über die Verwendung der Fächer entscheidet. Die technische Verwaltung seiner Fächer, ob und welche Lieferungen darin eingelegt sind und wer die Berechtigten für die Öffnung der Fächer sind, kann somit vom Partnerunternehmen, d.h. deren technischen Systemen erfolgen. Die technischen Systeme der Betreiberin können dabei auf die Bereitstellung der Fächer und den Authentifizierungsprozess zur Öffnung eines Faches beschränkt sein. Dabei wird z.B. nicht unterschieden, ob die Fachöffnung zum Einlegen einer Lieferung durch Lieferdienste oder Endkunden oder zur Entnahme oder Überprüfung geschieht

Hinsichtlich der Sicherheit ist besonders relevant, dass ein unbefugter Zugang zu Fächern der Fachanlage verhindert wird. In dem Fall, dass doch ein unbefugter Zugang zu einem Fach der Fachanlage aufgetreten ist, ist es außerdem relevant festzustellen, an welcher Stelle im System, d.h. z.B. in wessen Verantwortungsbereich, ein Sicherheitsleck vorlag. Wurden beim unbefugten Zugang beispielsweise kompromittierte Zugangsdaten verwendet, ist es relevant festzustellen, in welchem System oder Teil eines Systems die Zugangsdaten ausgespäht werden konnten. Das gilt besonders, wenn verschiedene Vorrichtungen oder Systeme Zugangsdaten für Fächer einer Fachanlage erzeugen können.

Hinsichtlich des Datenschutzes ist besonders relevant, dass personenbeziehbare Daten an möglichst wenigen Stellen im System gespeichert werden. Dabei ist es hinsichtlich einer Nutzung durch Partnerunternehmen wünschenswert, dass möglichst wenige datenschutzrelevante Informationen zusätzlich zum System des Partnerunternehmens auch im System der Fachanlage gespeichert werden oder zwischen diesen ausgetauscht werden müssen. Zusätzlich ist es hinsichtlich der flexiblen Nutzung wünschenswert, dass Partnerunternehmen mit verschiedenen Geschäftsmodellen selbst über den Grad der Sicherheit des Gesamtsystems entscheiden können.

Die vorliegende Erfindung hat sich die Aufgabe gestellt, einen oder mehrere der oben beschriebenen Nachteile zu überwinden und/oder einen oder mehrere der oben beschriebenen Vorteile zu erhalten und/oder eine oder mehrere der oben beschriebenen angestrebten Verbesserungen zu erreichen.

Gemäß einem ersten beispielhaften Aspekt der Erfindung wird ein Verfahren offenbart, welches beispielsweise von einer ersten Vorrichtung (z.B. einem Server des Anmelders) ausgeführt wird, das Verfahren umfassend: Erhalten einer ersten Information von einer zweiten Vorrichtung, wobei die erste Information mit der zweiten Vorrichtung assoziiert ist; Authentifizieren der zweiten Vorrichtung basierend auf zumindest der ersten Information; Erzeugen einer zweiten Information, wobei unter Verwendung der zweiten Information eine dritte, von der zweiten Vorrichtung verschiedene Vorrichtung oder ein Nutzer der dritten Vorrichtung Zugang zu einem oder mehreren Fächern einer Fachanlage erhalten kann; und Ausgeben der zweiten Information, wobei ein positives Ergebnis des Authentifizierens der zweiten Vorrichtung notwendige Bedingung für das Ausgeben der zweiten Information ist

Gemäß einem zweiten beispielhaften Aspekt der Erfindung wird ein Verfahren offenbart, welches beispielsweise von einer zweiten Vorrichtung (z.B. einem Server eines Partners, der seinem Kunden Zugang zu einem Fach einer Fachanlage ermöglichen möchte) ausgeführt wird, das Verfahren umfassend: Erhalten einer dritten Information von einer dritten Vorrichtung; Erzeugen einer ersten Information, wobei die erste Information mit der zweiten Vorrichtung assoziiert ist; und Ausgeben der ersten Information an einer erste Vorrichtung, um der ersten Vorrichtung ein Authentifizieren der zweiten Vorrichtung basierend auf zumindest der ersten Information zu ermöglichen, wobei ein positives Ergebnis des Authentifizierens notwendige Bedingung für ein Ausgeben einer zweiten Information von der ersten Vorrichtung ist, wobei unter Verwendung der zweiten Information eine dritte Vorrichtung oder ein Nutzer der dritten Vorrichtung Zugang zu einem oder mehreren Fächern einer Fachanlage erhalten kann, und wobei das Erhalten der dritten Information notwendige Bedingung für das Ausgeben der ersten Information ist.

Gemäß einem dritten beispielhaften Aspekt der Erfindung wird ein Verfahren offenbart, welches beispielsweise von einer dritten Vorrichtung (z.B. einer mobilen Vorrichtung) ausgeführt wird, das Verfahren umfassend: Erhalten einer dritten Information von einer Fachanlage oder Erzeugen einer dritten Information; und Ausgeben der dritten Information an eine zweite Vorrichtung, wobei das Erhalten der dritten Information durch die zweite Vorrichtung notwendige Bedingung für ein Ausgeben einer ersten Information durch die zweite Vorrichtung an eine erste Vorrichtung ist, wobei ein positives Ergebnis des Authentifizierens der zweiten Vorrichtung durch die erste Vorrichtung basierend zumindest auf der ersten Information eine notwendige Bedingung für ein Ausgeben einer zweiten Information durch die erste Vorrichtung ist, wobei unter Verwendung der zweiten Information die dritte Vorrichtung oder ein Nutzer der dritten Vorrichtung Zugang zu einem oder mehreren Fächern einer Fachanlage erhalten kann.

Gemäß einem vierten beispielhaften Aspekt der Erfindung wird ein Verfahren offenbart, welches beispielsweise von einer Fachanlage in einem System mit einer Vorrichtung nach dem ersten Aspekt der Erfindung, einer Vorrichtung nach dem zweiten Aspekt der Erfindung und einer Vorrichtung nach dem dritten Aspekt der Erfindung ausgeführt wird, das Verfahren umfassend: Erhalten der zweiten Information; und Feststellen, ob basierend auf der zweiten Information Zugang zu einem oder mehreren Fächern der Fachanlage gewährt werden kann.

Was die Terminologie betrifft, kann es sich bei einer "ersten Vorrichtung", einer "zweiten Vorrichtung" und einer "dritten Vorrichtung" jeweils um eine beliebige Vorrichtung handeln. Bei einer "ersten Vorrichtung" kann es sich aber beispielsweise auch um eine Vorrichtung gemäß dem ersten Aspekt der Erfindung handeln. Bei einer "zweiten Vorrichtung" kann es sich beispielsweise um eine Vorrichtung gemäß dem zweiten Aspekt der Erfindung handeln. Bei einer "dritten Vorrichtung" kann es sich beispielsweise auch um eine Vorrichtung gemäß dem dritten Aspekt der Erfindung handeln. Zudem kann beispielsweise die in den Verfahren gemäß verschiedenen Aspekten der Erfindung genannte "erste Vorrichtung" verfahrensübergreifend die gleiche Vorrichtung sein. Gleichermaßen kann beispielsweise die "zweite Vorrichtung" in den Verfahren gemäß verschiedenen Aspekten der Erfindung die gleiche Vorrichtung sein. Ebenso kann die "dritte Vorrichtung" in den Verfahren gemäß verschiedenen Aspekten der Erfindung die gleiche Vorrichtung sein.

Gleiches gilt für die "erste Information", die beispielsweise verfahrensübergreifend die gleiche Information sein kann, die "zweite Information", die verfahrensübergreifend die gleiche Information sein kann und die "dritte Information", die verfahrensübergreifend die gleiche Information sein kann.

Die vorliegende Anmeldung offenbart ferner für jeden der vier Aspekte der Erfindung:
- Ein Computerprogramm, umfassend Programmanweisungen, die einen Prozessor zur Ausführung und/oder Steuerung einer beispielhaften Ausführungsform des erfindungsgemäßen Verfahrens des jeweiligen Aspekts der Erfindung veranlassen, wenn das Computerprogramm auf dem Prozessor läuft Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein. In dem Backend-System, in jeder Fachanlage und in jedem Mobilgerät ist mindestens jeweils ein derartiger Prozessor integriert

- Eine Vorrichtung oder ein System umfassend zumindest mehr als eine Vorrichtung, wobei die Vorrichtung bzw. das System eingerichtet sind zur Ausführung und/oder Steuerung der beispielhaften Ausführungsform des jeweiligen Aspekts des erfindungsgemäßen Verfahrens oder umfassend jeweilige Mittel zur Ausführung und/oder Steuerung der Schritte der beispielhaften Ausführungsform des Aspekts des erfindungsgemäßen Verfahrens. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest die beispielhafte Ausführungsform des jeweiligen Aspekts des erfindungsgemäßen Verfahrens auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figu ren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Systems gemäß der vorliegenden Erfindung;
- Fig. 2: ein Flussdiagramm einer beispielhaften Ausführungsform eines Verfahrens gemäß dem ersten Aspekt vorliegenden Erfindung;
- Fig. 3: ein Flussdiagramm einer beispielhaften Ausführungsform eines Verfahrens gemäß dem zweiten Aspekt der vorliegenden Erfindung;
- Fig. 4: ein Flussdiagramm einer beispielhaften Ausführungsform eines Verfahrens gemäß dem dritten Aspekt der vorliegenden Erfindung;
- Fig. 5: ein Flussdiagramm einer beispielhaften Ausführungsform eines Verfahrens gemäß dem vierten Aspekt der vorliegenden Erfindung;
- Fig. 6: eine schematische Darstellung beispielhafter Datenübertragungen zwischen Vorrichtungen, die jeweils beispielhafte Ausführungsformen von Verfahren gemäß einem jeweiligen Aspekt der Erfindung ausführen;
- Fig. 7: eine schematische Darstellung beispielhafter Datenübertragungen zwischen Vorrichtungen, die jeweils beispielhafte Ausführungsformen von Verfahren gemäß einem jeweiligen Aspekt der Erfindung ausführen;
- Fig. 8: eine schematische Darstellung einer beispielhaften Ausführungsform einer Vorrichtung gemäß dem ersten oder zweiten Aspekt der vorliegenden Erfindung;
- Fig. 9: eine schematische Darstellung einer beispielhaften Ausführungsform einer Vorrichtung gemäß dem vierten Aspekt der vorliegenden Erfindung;
- Fig. 10: eine schematische Darstellung einer beispielhaften Ausführungsform einer Vorrichtung gemäß dem dritten Aspekt der vorliegenden Erfindung;

### Detaillierte Beschreibung einiger beispielhafter Ausführungsformen der Erfindung

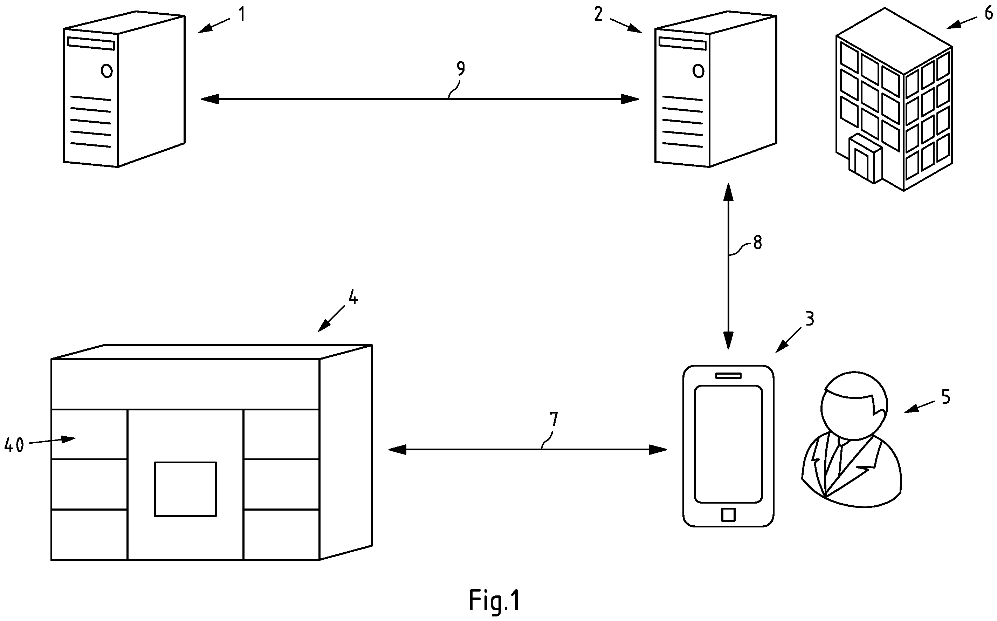

Fig. 1 zeigt schematisch ein System gemäß einer beispielhaften Ausführungsform der vorliegenden Erfindung.

Das System umfasst eine Fachanlage 4 mit einer Mehrzahl von Fächern, von denen ein Fach in Fig. 1 mit Bezugszeichen 40 versehen ist Jedes der Fächer der Fachanlage 4 ist zur Aufnahme einer oder mehrerer Sendungen und/oder eines oder mehrerer Objekte, z.B. für einen individuellen Benutzer oder eine Gruppe von Benutzern, vorgesehen. Einem individuellen Benutzer oder einer Gruppe von Benutzern können auch mehrere Fächer zugeordnet sein. Jedes Fach ist im Grundzustand verriegelt bzw. geschlossen und kann anweisungsgesteuert und individuell durch beispielsweise eine in der Fachanlage 4 vorgesehene Schlosssteuereinheit elektrisch entriegelt bzw. geöffnet werden. Ein Beispiel einer derartigen Fachanlage 4 ist eine Fachanlage gemäß dem bekannten Packstation-Konzept der Anmelderin.

Die Fachanlage 4 ist mit einer oder mehreren Kommunikationsschnittstelle(n) ausgerüstet, die beispielsweise eine Schnittstelle zur drahtlosen Kommunikation mit Mobilgerät 3 umfasst/umfassen, beispielsweise mittels optischer Übertragung und/oder mittels Kommunikation, die auf elektrischen, magnetischen oder elektromagnetischen Signalen oder Feldern beruht, insbesondere Nahbereich-Kommunikation z.B. beruhend auf optischer Übertragung, Bluetooth, Wireless Local Area Network (WLAN), ZigBee, Near Field Communication (NFC), Infrared Data Association (IrDA) und/oder Radio-Frequency Identification (RFID). Vorzugsweise übernimmt das Mobilgerät 3 des Benutzers 5 die Funktion einer Benutzerschnittstelle für die Fachanlage 4, sodass die Fachanlage 4 besonders einfach ausgebildet sein kann. Die Bedienung der Fachanlage 4 erfolgt dann beispielsweise durch das Mobilgerät 3, insbesondere durch eine darauf installierte App, die mit dem Partner-Server 2 kommuniziert und/oder in Form eines Relais den Datenaustausch zwischen der Fachanlage 4 und dem Partner-Server 2 und/oder mittelbar zwischen der Fachanlage 4 und dem Backend-System 1 ermöglicht. Dazu kommuniziert die Fachanlage 4 mit dem Mobilgerät 3 über eine Nahbereich-Datenkommunikationsverbindung 7 (z.B. Bluetooth, NFC, RFID, WLAN, ZigBee, IrDA, QR-Codes etc.) und muss dann insbesondere keine Fern-Datenkommunikationsverbindung (z.B. eine zellulare Mobilfunkverbindung) mit dem Backend-System 1 und/oder dem Partner-Server 2 einrichten können, da diese Funktionalität von dem Mobilgerät 3 bereitgestellt wird.

Eine zweite Vorrichtung 2, die in dieser beispielhaften Ausführungsform beispielsweise ein Partner-Server 2 ist, wird von einem Partner 6 betrieben, der ein Fachkontigent aus einem oder mehreren Fächern einer Fachanlage 4 besitzt und selbst verwaltet. Es verwaltet, welchen Benutzern 5 Zugang zu welchem im Grundzustand verriegelten Fach oder Fächern 40 der von ihm verwalteten Fächer der Fachanlage 4 zu erteilen ist Unter Benutzern 5 können beispielsweise Personen verstanden werden, die die Fachanlage 4 zum Empfangen und/oder Versenden von Sendungen (z.B. Pakete, Briefe, etc.) und/oder zum Einlegen und/oder Entnehmen von Objekten (z.B. Speisen, Lebensmittel, Wäsche, Schlüssel etc.) verwenden, sowie Zusteller, die derartige Sendungen und/oder Lieferungen von Objekten in die Fachanlage 4 zustellen bzw. aus der Fachanlage 4 abholen. Ein Benutzer 5 kann ein Mensch oder eine Maschine sein, z.B. ein Fahrzeug, ein Roboter oder eine Drohne, um nur ein paar Beispiele zu nennen.

Um Zugang zu einem oder mehreren Fächern 40 der Fachanlage 4 zu erhalten, muss der Benutzer 5 durch Verwendung einer dritten, vorzugsweise mobilen Vorrichtung 3 eine Information an den Partner-Server 2 übertragen. In diesem Ausführungsbeispiel handelt es sich bei der dritten Vorrichtung 3 beispielhaft um ein Mobilgerät 3 (das beispielsweise ein Mobiltelefon, insbesondere einem Smartphone, oder ein Handscanner eines Zustellers sein kann). Auf dem Mobilgerät 3, beispielsweise ein Smartphone, wird beispielsweise eine App, also ein komplexes Programm, ausgeführt, welche der Benutzer 5 zu einem früheren Zeitpunkt, beispielsweise anlässlich seiner Registrierung zur Nutzung des Partner-Servers 2, auf dem Mobilgerät 3 installiert hat oder für den Benutzer 5 installiert wurde. Das Mobilgerät 3 ist hier beispielhaft ausgebildet zum Etablieren einer Nahbereich-Datenkommunikationsverbindung 7, beispielsweise optische Übertragung, Bluetooth, ZigBee, NFC, RFID, WLAN oder IrDA mit der Fachanlage 4 bzw. deren Kommunikationsschnittstelle und zum Etablieren einer Fern-Datenkommunikationsverbindung 8, beispielsweise über eine Datenkommunikationsverbindung eines zellularen Mobilfunksystems, mit dem Partner-Server 2 bzw. dessen Kommunikationsschnittstelle, wie in Fig. 1 durch jeweilige Pfeile veranschaulicht. Beispielsweise basiert die Kommunikation zwischen dem Mobilgerät 3 und dem Partner-Server 2 auf dem Internet Protocol (IP), wobei der Partner-Server 2 über das Internet erreichbar ist, und das Mobilgerät 3 über eine drahtlose Funkverbindung (z.B. eine zellulare Mobilfunkverbindung) auf das Internet zugreift Die Kommunikation zwischen dem Mobilgerät 3 und dem Partner-Server 2 kann teilweise oder vollständig verschlüsselt erfolgen. Auf dem Mobilgerät 3 kann eine App bzw. ein Programm installiert sein, welche(s) sowohl die Kommunikation mit der Fachanlage 4, dem Benutzer 5 sowie mit dem Partner-Server 2 steuert und beispielsweise von dem Partner 6 bereitgestellt wird. Dadurch kann der Benutzer 5 beispielsweise ein handelsübliches Smartphone als Mobilgerät 3 einsetzen, auf dem dann lediglich eine derartige App installiert und - beispielsweise durch Registrierung im Partner-Server 2 - in Betrieb genommen werden muss.

Eine erste Vorrichtung 1, die in dieser beispielhaften Ausführungsform beispielsweise ein Backend-System 1 ist, verwaltet zentral, welchem Partner 6 Zugang zu welchem (im Grundzustand verriegelten) Fach oder Fächern 40 der Fachanlage 4 zu erteilen ist. Unter Partnern können beispielsweise Vertrags- oder Schnittstellenpartner verstanden werden, die beispielsweise langfristig vertraglich festgelegt bestimmte Fächer der Fachanlage 4 selbst verwalten und Benutzern zur Verfügung stellen. Die Kommunikation zwischen dem Partner-Server 2 und dem Backend-System 1 erfolgt hier beispielsweise mittels Fern-Datenkommunikation 9, beispielsweise über eine Schnittstelle zu einem zellularen Mobilfunksystem, eine Digital Subscriber Line (DSL)-Schnittstelle oder eine Local Area Network (LAN)-Schnittstelle. Alternativ können das Backend-System 1 und der Partner-Server 2 sich lokal nahe beieinander befinden und miteinander mittels einer lokalen Verbindung (z.B. über ein Local Area Network) kommunizieren.

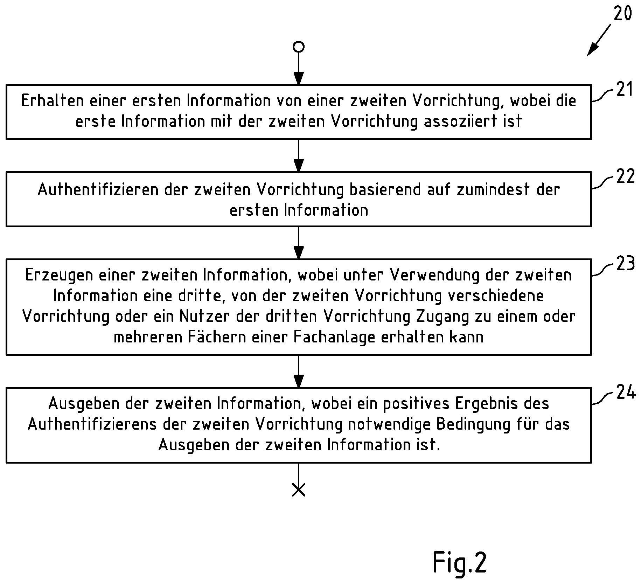

Fig. 2 zeigt ein Flussdiagramm 20 einer beispielhaften Ausführungsform eines Verfahrens gemäß dem ersten Aspekt der vorliegenden Erfindung, beispielsweise ausgeführt und/oder gesteuert von einer ersten Vorrichtung. Die erste Vorrichtung ist dabei beispielsweise das Backend-System 1 aus Fig. 1.

In Schritt 21 wird eine erste Information von einer zweiten Vorrichtung erhalten, wobei die erste Information mit der zweiten Vorrichtung assoziiert ist. In Schritt 22 wird die zweite Vorrichtung basierend auf zumindest der ersten Information authentifiziert. In Schritt 23 wird eine zweite Information erzeugt, wobei unter Verwendung der zweiten Information eine dritte, von der zweiten Vorrichtung verschiedene Vorrichtung oder ein Nutzer der dritten Vorrichtung Zugang zu einem oder mehreren Fächern einer Fachanlage 4 erhalten kann. In Schritt 24 wird die zweite Information ausgegeben, wobei ein positives Ergebnis des Authentifizierens der zweiten Vorrichtung notwendige Bedingung für das Ausgeben der zweiten Information ist Die zweite Information kann beispielsweise an die zweite Vorrichtung ausgegeben werden oder in Ausführungsformen mit einer direkten Datenverbindung zwischen der ersten Vorrichtung und der Fachanlage 4 direkt an die Fachanlage 4 ausgegeben werden.

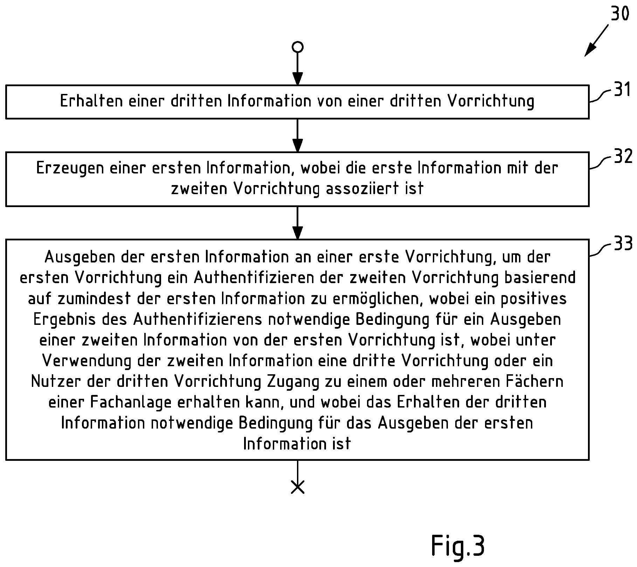

Fig. 3 zeigt ein Flussdiagramm 30 einer beispielhaften Ausführungsform eines Verfahrens gemäß dem zweiten Aspekt der vorliegenden Erfindung, beispielsweise ausgeführt und/oder gesteuert von einer zweiten Vorrichtung. Die zweite Vorrichtung ist dabei beispielsweise der Partner-Server 2 aus Fig. 1.

In Schritt 31 wird eine dritte Information von einer dritten Vorrichtung erhalten. In Schritt 32 wird eine erste Information erzeugt, wobei die erste Information mit der zweiten Vorrichtung assoziiert ist Die Erzeugung kann beispielsweise in Reaktion auf Schritt 31 erfolgen. Die Erzeugung kann aber auch unabhängig vom Erhalt der ersten Information erzeugt werden, insbesondere kann die erste Information vor Erhalt der ersten Information erzeugt worden und beispielsweise im Partner-Server 2 gespeichert worden sein. In Schritt 33 wird die erste Information an eine erste Vorrichtung ausgegeben, um der ersten Vorrichtung ein Authentifizieren der zweiten Vorrichtung basierend auf zumindest der ersten Information zu ermöglichen, wobei ein positives Ergebnis des Authentifizierens notwendige Bedingung für ein Ausgeben einer zweiten Information von der ersten Vorrichtung ist, wobei unter Verwendung der zweiten Information eine dritte Vorrichtung oder ein Nutzer der dritten Vorrichtung Zugang zu einem oder mehreren Fächern 40 einer Fachanlage 4 erhalten kann, und wobei das Erhalten der dritten Information notwendige Bedingung für das Ausgeben der ersten Information ist Die Ausgabe korrespondiert mit dem Erhalt der ersten Information in Schritt 21 des Flussdiagramms 2.

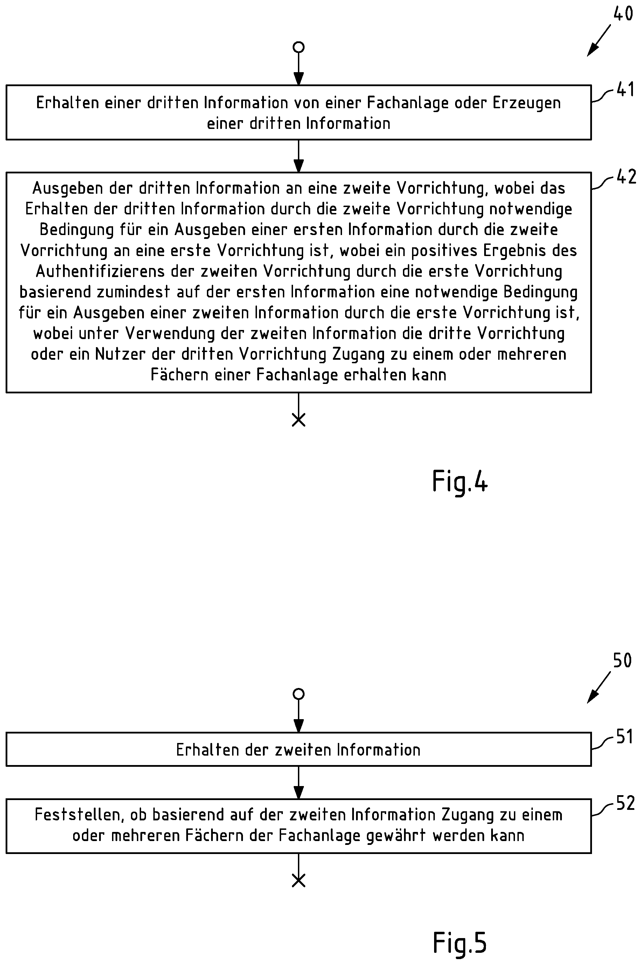

Fig. 4 zeigt ein Flussdiagramm 40 einer beispielhaften Ausführungsform eines Verfahrens gemäß dem dritten Aspekt der vorliegenden Erfindung, beispielsweise ausgeführt und/oder gesteuert von einer dritten Vorrichtung. Die dritte Vorrichtung ist dabei beispielsweise das Mobil-gerät 3 aus Fig. 1. In anderen Ausführungsformen kann die dritte Vorrichtung beispielsweise ein Handscanner eines Lieferanten sein.

In Schritt 41 wird eine dritte Information erzeugt oder von einer Fachanlage 4 erhalten. In Schritt 42 wird die dritte Information an eine zweite Vorrichtung ausgegeben, wobei das Erhalten der dritten Information durch die zweite Vorrichtung notwendige Bedingung für ein Ausgeben einer ersten Information durch die zweite Vorrichtung an eine erste Vorrichtung ist, wobei ein positives Ergebnis des Authentifizierens der zweiten Vorrichtung durch die erste Vorrichtung basierend zumindest auf der ersten Information eine notwendige Bedingung für ein Ausgeben einer zweiten Information durch die erste Vorrichtung ist, wobei unter Verwendung der zweiten Information die dritte Vorrichtung oder ein Nutzer der dritten Vorrichtung Zugang zu einem oder mehreren Fächern 40 einer Fachanlage 4 erhalten kann. Die Ausgabe korrespondiert mit dem Erhalt der dritten Information in Schritt 31 des Flussdiagramms 3.

Fig. 5 zeigt ein Flussdiagramm 50 einer beispielhaften Ausführungsform eines Verfahrens gemäß dem vierten Aspekt der vorliegenden Erfindung, beispielsweise ausgeführt und/oder gesteuert von einer Fachanlage 4 in einem System mit einer Vorrichtung nach dem ersten Aspekt der Erfindung, einer Vorrichtung nach dem zweiten Aspekt der Erfindung und einer Vorrichtung nach dem dritten Aspekt der Erfindung.

In Schritt 51 wird die zweite Information erhalten. Die zweite Information kann beispielsweise von der dritten Vorrichtung erhalten werden oder in Ausführungsformen mit einer direkten Datenverbindung zwischen der ersten Vorrichtung und der Fachanlage 4 direkt von der ersten Vorrichtung erhalten werden. In Schritt 52 wird festgestellt, ob basierend auf der zweiten Information Zugang zu einem oder mehreren Fächern der Fachanlage 4 gewährt werden kann. Das Feststellen, dass basierend auf der zweiten Information Zugang zu einem oder mehreren Fächern der Fachanlage 4 gewährt werden kann, basiert beispielsweise auf einer erfolgreichen Entschlüsselung der zweiten Information oder auf der Prüfung einer Signatur der ersten Vorrichtung durch die Fachanlage.

Um Zugang zu einem oder mehreren Fächern 40 der Fachanlage 4 zu erhalten, muss der Benutzer 5 eine Zugangsanfrage an den Partner-Server 2 stellen. Dazu übermittelt (Fig. 4 Schritt 42) der Benutzer 5 unter Verwendung des Mobilgeräts 3 eine Initialmeldung an den Partner-Server 2. Die Initialmeldung ist beispielsweise die dritte Information gemäß dem zweiten oder dritten Aspekt der Erfindung. Die Initialmeldung kann von der Fachanlage 4 erzeugt und an das Mobil-gerät 3 über die Nahbereich-Datenkommunikationsverbindung 7 übermittelt worden sein oder von dem Mobilgerät 3 selbst erzeugt werden (Fig. 4 Schritt 41).

Um einem Benutzer 5 nach Erhalten der Initialmeldung (Fig. 3 Schritt 31) den angefragten Zugang zu einem oder mehreren Fächern 40 der Fachanlage 4 zu ermöglichen, muss sich der Partner 6 zunächst gegenüber dem Backend-System 1 authentisieren. Dazu muss der Partner 6 zunächst über den Partner-Server 2 eine zuvor erzeugt erste Information (Fig. 3 Schritt 32) an das Backend-System 1 übermitteln (Fig. 3 Schritt 33). Die erste Information muss mindestens eine mit dem Partner-Server 2 assoziierte Information, beispielsweise eine Authentisierungsinformation enthalten. Die Authentisierungsinformation kann z.B. eine dauerhaft zugeordnete Partnerkennung, eine digitale Signatur oder eine Partnerkennung-Passwort-Kombination (also eine Kombination aus Partnerkennung und zugehörigem Passwort) sein. Zusätzlich kann die erste Information beispielsweise Informationen zu einem oder mehreren Fächern 40 der Fachanlage 4 enthalten, für die der Partner 6 dem Benutzer 5 Zugang gewähren möchte.

Das Backend-System 1 ist durch mindestens eine Servereinrichtung gebildet. Im Backend-System 1 sind registrierten Partnern 6 zugeordnete jeweilige Authentifizierungsinformationen gespeichert, die zumindest teilweise statisch oder zeitlich veränderlich sind. Nach Erhalten der ersten Information (Fig. 2 Schritt 21), führt das Backend-System 1 einen Prozess zum Authentifizieren des Partners 6 durch (Fig. 2 Schritt 22), indem es die von dem Partner-Server 2 bereitgestellten Authentisierungsinformationen mit den für diesen Partner 6 gespeicherten Authentifizierungsinformationen vergleicht. Der Partner-Server 2 wird nur unter der Bedingung positiv authentifiziert, dass die Gültigkeit der bei der Authentisierung bereitgestellten Authentisierungsinformation(en) verifiziert und bestätigt worden ist. Beispielsweise wird der Partner-Server 2 nur dann positiv bzw. erfolgreich authentifiziert, falls die von dem Partner-Server 2 bereitgestellte Authentisierungsinformation mit einer für diesen Partner 6 gespeicherten Authentifizierungsinformation übereinstimmt bzw. dazu korrespondiert oder mittels einer vorgegebenen Transformation auf diese abgebildet werden kann. Andernfalls, wenn bei der Prüfung die von dem Partner-Server 2 bereitgestellten Authentisierungsinformationen als ungültig beurteilt worden sind, wird die Authentifizierung erfolglos bzw. mit einem negativen Ergebnis beendet. Das Ergebnis des (vollständig durchgeführten) Prozesses zum Authentifizieren des Partner-Servers 2 ist derart, dass der Partner-Server 2 entweder - im Fall einer Authentifizierung mit positivem Ergebnis - authentifiziert ist oder - im Fall ohne Authentifizierung des Partner-Servers 2 bzw. bei negativem Ergebnis- nicht authentifiziert ist Bei positivem Ergebnis erzeugt das Backend-System 1 eine zweite Information (Fig. 2 Schritt 23), die beispielsweise eine Öffnungsanweisung zum Entriegeln oder Öffnen eines oder mehrerer Fächer 40 der Fachanlage 4 enthält und gibt diese aus (Fig. 2 Schritt 24). Nach Erhalt der zweiten Information (Fig. 5 Schritt 51) prüft die Fachanlage, ob die erhaltenen Informationen zum Zugang zu einem oder mehreren Fächern 40 berechtigen (Fig. 5 Schritt 52), und öffnet bei positivem Prüfergebnis das Fach oder die Fächer 40, sodass dem Benutzer 5 Zugang gewährt wird.

Durch die Trennung der Zugangsanfrage des Benutzers 5 an den Partner-Server 2 einerseits und der Authentifizierung des Partners 6 gegenüber dem Backend-System 1 andererseits wird eine flexible Nutzung der Fachanlage 4 ermöglicht. Der Betreiber der Fachanlage 4 ist beispielsweise weder technisch noch prozessual an den Benutzerabläufen des Partners 6 beteiligt. Für den Betreiber des Backend-Systems 1 und der Fachanlage 4 ist dies insbesondere vorteilhaft, da beispielsweise keine speziellen Daten und/oder Benutzerschnittstellen für die einzelnen Benutzer 5 von einem oder mehreren verschiedenen Partnern 6 im Backend-System 1 bereitgehalten werden müssen. Zudem ergeben sich nur geringe Verantwortlichkeiten des Betreibers beispielsweise hinsichtlich Datenschutz-, Haftungs- und/oder Kundendienstfragen. Für den Partner 6 ergibt sich der Vorteil, beispielsweise die Registrierungs-, Anmelde- und/oder Abholprozesse des Benutzers 5, sowie beispielsweise eine diesbezügliche App auf dem Mobilgerät 3 des Benutzers 5 souverän selbst gestalten zu können. Dies ist insbesondere vorteilhaft, da so verschiedene Partner 6 verschiedene Geschäftsmodelle umsetzen und ihre Prozesse an diese Geschäftsmodelle und z.B. damit einhergehende rechtliche Vorgaben anpassen können. Beispielsweise unterliegt das Versenden/Empfangen von beispielsweise Lebensmitteln, Speisen oder Wäsche im Vergleich zu beispielsweise Pakten oder Briefen anderen gesetzlichen Vorgaben z.B. hinsichtlich des Datenschutzes (z.B. Postgeheimnis), sodass beispielsweise für Pakete zwingend eine Registrierung des Benutzers 5 erforderlich sein kann, während für Lebensmittel auf diese verzichtet werden könnte. Der Benutzer 5 hat den Vorteil, dass er beispielsweise lediglich die App des Partners 6, dessen Service er durch Nutzung der Fachanlage 4 nutzen möchte, auf seinem Mobil-gerät installiert haben muss. Eine zusätzliche App des Betreibers der Fachanlage 4 bzw. des Backend-Systems 1, eine Registrierung bei dem Betreiber der Fachanlage 4 bzw. des Backend-Systems 1 und/oder eine Identifizierung/Authentifizierung des Benutzers 5 gegenüber dem Backend-System 1 ist hingegen nicht notwendig.

Gemäß der in Fig. 1 veranschaulichten Ausführungsform besteht vorzugsweise keine direkte Datenkommunikationsverbindung zwischen dem Backend-System 1 und der Fachanlage 4, sondern diese können nur per Datenweiterleitung über den Partner-Server 2 und das Mobilgerät 3 miteinander kommunizieren. Dadurch muss die Fachanlage 4 vorteilhafterweise keine Fern-Datenkommunikationsschnittstelle, beispielsweise keine LAN-Schnittstelle und/oder Mobilfunkschnittstelle aufweisen und kann daher vorteilhaft auch an entlegenen Orten aufgestellt werden. Die Anweisung von dem Backend-System 1 an die Fachanlage 4 wird dazu in der in Fig. 1 veranschaulichten Ausführungsform zunächst über die Fern-Datenkommunikationsverbindung 9 an den Partner-Server 2, anschließend über die Fern-Datenkommunikationsverbindung 8 vom Partner-Server 2 an das Mobilgerät 3 und anschließend von dem Mobilgerät 3 über die Nahbereich-Datenkommunikationsverbindung 7 an die Fachanlage 4 übertragen.

Dazu umfasst das Verfahren 30 in beispielhaften Ausführungsformen gemäß dem zweiten Aspekt der Erfindung ferner das Erhalten der zweiten Information von der ersten Vorrichtung, in dieser beispielhaften Ausführungsform das Backend-System 1, und das Ausgeben der zweiten Information an die dritte Vorrichtung, in dieser beispielhaften Ausführungsform das Mobilgerät 3, sowie das Verfahren 40 in beispielhaften Ausführungsformen gemäß dem dritten Aspekt der Erfindung ferner das Erhalten der zweiten Information von der zweiten Vorrichtung, in dieser beispielhaften Ausführungsform dem Partner-Server 2, und das Ausgeben der zweiten Information an die Fachanlage 4. In anderen Ausführungsformen kann die Übermittlung der zweiten Information auch über eine direkte Datenkommunikationsverbindung zwischen dem Backend-System 1 und der Fachanlage 4 erfolgen.

In beispielhaften Ausführungsformen des vierten Aspekts der Erfindung kann das Verfahren 50 ferner ein Erzeugen der dritten Information und Ausgeben der dritten Information an die dritte Vorrichtung 3, in dieser beispielsweisen Ausführungsform das Mobilgerät 3, sein. Das Erzeugen der dritten Information wird beispielsweise durch die Fachanlage 4 durchgeführt Die dritte Information kann beispielsweise eine Fachanlagenkennung, ein Zeitstempel, ein Zähler und/oder Indizes für verschiedene Protokollabläufe enthalten. Dies kann zum Beispiel vorteilhaft sein, wenn der Partner 6 mehrere Fachanlagen 4 verwaltet, sodass der Partner-Server 2 feststellen kann, vor welcher Fachanlage 4 sich der Benutzer 5 befindet, ohne dass der Benutzer 5 dazu aktiv Informationen für den Partner-Server 2 erzeugen muss.

In beispielhaften Ausführungsformen des zweiten Aspekts der Erfindung kann das Verfahren 30 ferner ein Ausgeben der dritten Information an die erste Vorrichtung 1, in dieser beispielhaften Ausführungsform das Backend-System 1, umfassen, wobei die dritte Information mit der Fachanlage 4 assoziiert ist. In beispielhaften Ausführungsformen des ersten Aspekts der Erfindung kann das Verfahren 20 ferner ein Erhalten der dritten Information von der zweiten Vorrichtung 2, in dieser beispielhaften Ausführungsform der Partner-Server 2, umfassen, wobei die dritte Information mit der Fachanlage 4 assoziiert ist. Die dritte Information kann wie bereits erläutert beispielsweise eine Fachanlagenkennung, ein Zeitstempel, ein Zähler und/oder Indizes für verschiedene Protokollabläufe enthalten. Die Assoziation der dritten Information einer Fachanlage 4 ist beispielsweise bereits dadurch gegeben, dass die dritte Information durch die Fachanlage 4 erzeugt wurde. Die Assoziation kann aber auch durch eine Zuordenbarkeit der dritten Information zu einer Fachanlage 4 oder einem oder mehreren Fächern 40 der Fachanlage 4 gegeben sein. Die Übermittlung der dritten Information an die erste Vorrichtung 1 kann beispielsweise in Ausführungsformen, bei denen das Authentifizieren der zweiten Vorrichtung 2 durch die erste Vorrichtung 1 (Fig. 2 Schritt 22) ferner auf der dritten Information basiert, vorteilhaft sein. Beispielsweise verwaltet das Backend-System 1 mehrere Fachanlagen 4, von denen der Partner 6 nicht für alle Fachanlagen 4 autorisiert ist, sodass das Ergebnis der Authentifizierung des Partners 6 von der Fachanlage 4 oder dem Fach/den Fächern 40 der Fachanlage 4 abhängt, zu denen Zugang gewährt werden soll. Enthält die dritte Information Informationen zu Protokollabläufen, kann eine Übermittlung der dritten Information vom Partner-Server 2 zum Backend-System 1 vorteilhaft sein, wenn z.B. verschiedene Protokollversionen oder verschiedene Verschlüsselungsmethoden zur Datenkommunikation zwischen Backend-System 1 und Fachanlage 4 existieren. Zudem kann in manchen dieser beispielhaften Ausführungsformen das Authentifizieren der zweiten Vorrichtung 2 durch die erste Vorrichtung 1 (Fig. 2 Schritt 22) ferner auf der dritten Information basieren. Beispielsweise wird die dritte Information vorteilhafterweise nur von der Fachanlage 4 erzeugt, wenn sich das Mobilgerät 3 am Ort (insbesondere am gegenwärtigen Ort) der (beispielsweise stationär aufgestellten) Fachanlage 4 befindet. Dies kann beispielsweise durch eine Näheprüfung auf Basis einer drahtlosen und/oder drahtgebundenen Verbindung, einer Nahfeldkopplung, beispielsweise einer induktiven oder kapazitiven Kopplung, einer Funkverbindung oder der Nahbereich-Datenkommunikationsverbindung 8 zwischen der Fachanlage 4 und dem Mobilgerät 3 geschehen. So wird vorteilhafterweise nur Zugang zu einem oder mehreren Fächern 40 der Fachanlage 4 gewährt, wenn sich der Benutzer 5 an der Fachanlage 4 aufhält.

Bei beispielhaften Ausführungsformen gemäß dem zweiten Aspekts der Erfindung kann das Verfahren ferner ein Erzeugen einer vierten Information und Ausgeben der erzeugten vierten Information an eine erste Vorrichtung 1, in dieser beispielhaften Ausführungsform das Backend-System 1, umfassen, wobei die vierte Information mit der dritten Vorrichtung 3, in dieser beispielhaften Ausführungsform dem Mobilgerät 3, assoziiert ist und wobei nach Erhalten der vierten Information durch die erste Vorrichtung 1 zumindest eine zwischen der ersten Vorrichtung 1 und der zweiten Vorrichtung 2, in dieser beispielhaften Ausführungsform dem Partner-Server 2, übertragene Information zumindest auf der vierten Information basiert Die Erzeugung der vierten Information erfolgt beispielsweise durch den Partner-Server 2 zum Zeitpunkt des Erhalts der dritten Information von dem Mobilgerät 3.

Bei beispielhaften Ausführungsformen des erfindungsgemäßen Verfahrens gemäß dem ersten Aspekt kann das Verfahren 20 zudem ein Erhalten einer vierten Information von der zweiten Vorrichtung 2, in dieser beispielhaften Ausführungsform dem Partner-Server 2, umfassen, wobei die vierte Information mit der dritten Vorrichtung 3, in dieser beispielhaften Ausführungsform dem Mobilgerät 3, assoziiert ist und wobei nach Erhalten der vierten Information durch die erste Vorrichtung 1 zumindest eine Information, die zwischen der ersten Vorrichtung 1, in dieser beispielhaften Ausführungsform dem Backend-System 1, und der zweiten Vorrichtung 2 übertragen wird, zumindest auf der vierten Information basiert. Das Empfangen erfolgt beispielsweise durch das Backend-System 1. Die vierte Information enthält beispielsweise eine (insbesondere eindeutige) interne Sitzungsnummer (Sitzungs-ID) des Partner-Servers 2. Die Assoziation der vierten Information mit dem Mobilgerät 3 ist beispielsweise dadurch gegeben, dass die vierte Information bei Erhalt der dritten Information von dem Mobilgerät 3 durch den Partner-Server 2 erzeugt wird. Die Assoziation kann aber auch durch eine Zuordenbarkeit der vierten Information zum Mobilgerät 3 im Partner-Server 2 gegeben sein. Die Übermittlung der Sitzungs-ID erfolgt bevorzugt von dem Partner-Server 2 an das Backend-System 1 über eine Fern-Datenkommunikationsverbindung 9. Die Sitzungs-ID dient zur Zuordnung der Daten, die zwischen Backend-System 1 und Partner-Server 2 ausgetauscht werden und ist in einem nachfolgenden Datenaustausch in den übertragenen Informationen enthalten. Damit ist es beispielweise möglich, dass mehrere Sitzungen zwischen Backend-System 1 und Partner-Server 2 für verschiedene Benutzer 5 parallel aufrechterhalten werden und Informationen eindeutig einer Sitzung zugeordnet werden können.

Bei beispielhaften Ausführungsformen gemäß dem zweiten Aspekt der Erfindung kann das Verfahren 40 ferner ein Erzeugen einer fünften Information und das Ausgeben der erzeugten fünften Information an die erste Vorrichtung 1, in dieser beispielhaften Ausführungsform das Backend-System 1, umfassen, wobei das Erhalten der fünften Information eine weitere notwendige Bedingung für das Ausgeben der zweiten Information (Fig. 2 Schritt 24) durch die erste Vorrichtung 1 ist Die Erzeugung der fünften Information erfolgt beispielsweise durch den Partner-Server 2 und findet beispielsweise zum Zeitpunkt bzw. bei dem Ereignis statt, wenn sich der Benutzer 5 unter Verwendung seines Mobilgeräts 3 positiv bei dem Partner-Server 2 authentisiert hat und zum Zugang zu einem oder mehreren 40 Fächern der Fachanlage 4 berechtigt ist, das/die von dem Partner-Server 2 verwaltet wird/werden. Alternativ kann die Erzeugung beispielsweise auch schon bei Erhalt der dritten Information stattfinden. Die fünfte Information ist beispielsweise ein Öffnungswunsch, der beispielsweise die Fachanlagenkennung und die Fachnummer(n) enthält, für die der Benutzer 5 Zugang erhalten soll. Die Ausgabe der sechsten Information erfolgt bevorzugt von dem Partner-Server 2 an das Backend-System 1 über eine Fern-Datenkommunikationsverbindung 9.

Entsprechend kann bei beispielhaften Ausführungsformen gemäß dem ersten Aspekt der Erfindung das Verfahren 20 zudem ein Erhalten der fünften Information von der zweiten Vorrichtung 2, in dieser beispielhaften Ausführungsform der Partner-Server 2, umfassen, wobei das Erhalten der fünften Information eine weitere notwendige Bedingung für das Ausgeben der zweiten Information (Fig. 2 Schritt 24) ist. Das Erhalten erfolgt beispielsweise durch das Backend-System 1. Die fünfte Information ist wie bereits erläutert beispielsweise ein Öffnungswunsch und kann beispielsweise die Fachanlagenkennung und die Fachnummer(n) enthalten, für die der Benutzer 5 Zugang erhalten soll. Ist das Ergebnis der oben bereits erläuterten Authentifizierung des Partner-Servers 2 gegenüber dem Backend-System 1 (Fig. 2 Schritt 22) positiv und wird der Öffnungswunsch als plausibel eingestuft, erzeugt das Backend-System 1 die zweite Information (Fig. 2 Schritt 23), die einen Öffnungsanweisung zum Entriegeln oder Öffnen eines oder mehrerer Fächer 40 der Fachanlage 4 enthält, und übermittelt diese an die Fachanlage 4, wie oben bereits erläutert Ein Öffnungswunsch wird beispielsweise als plausibel eingestuft, wenn der Partner 6 für die im Öffnungswunsch durch die enthaltenen Fachanlagenkennung und die Fachnummer(n) spezifizierten Fächer 40 der Fachanlagen 4 autorisiert ist.

Bei beispielhaften Ausführungsformen gemäß dem ersten Aspekt der Erfindung kann das Verfahren 20 ferner ein Erzeugen einer sechsten Information und das Ausgeben der sechsten Information an die zweite Vorrichtung 2, in dieser beispielhaften Ausführungsform den Partner-Server 2, umfassen, wobei die sechste Information auf einem Ergebnis des Prozesses zum Authentifizieren der zweiten Vorrichtung 2 (Fig. 2 Schritt 22) basiert Die sechste Information kann beispielsweise das Ergebnis der Authentifizierungsprüfung (Fig. 2 Schritt 22) enthalten. Die Erzeugung der sechsten Information erfolgt beispielsweise durch das Backend-System 1 und findet beispielsweise zum Zeitpunkt bzw. bei dem Ereignis statt, wenn das Ergebnis dieser Authentifizierung des Partners 6 gegenüber dem Backend-System 1 feststeht Die Übertragung der sechsten Information erfolgt beispielsweise von dem Backend-System 1 an den Partner-Server 2 über eine Fern-Datenkommunikationsverbindung 9.

Entsprechend kann bei beispielhaften Ausführungsformen gemäß dem zweiten Aspekt der Erfindung das Verfahren 30 zudem ein Erhalten der sechsten Information von der ersten Vorrichtung 1, in dieser beispielhaften Ausführungsform dem Backend-System 1, umfassen, wobei die sechste Information auf einem Ergebnis des Authentifizierens der zweiten Vorrichtung 2 (Fig. 2 Schritt 22), in dieser beispielhaften Ausführungsform des Partner-Servers 2, basiert Das Erhalten erfolgt beispielsweise durch den Partner-Server 2. Die sechste Information kann wie erläutert beispielsweise das Ergebnis der Authentifizierungsprüfung (Fig. 2 Schritt 22) enthalten. Ist das in der sechsten Information enthaltende Ergebnis dieser Authentifizierungsprüfung positiv, erfolgt das oben beschriebene das Ausgeben der fünften Information an das Backend-System 1. Ist das Ergebnis negativ oder ist beispielsweise kein Ergebnis erhalten worden, erfolgt keine Ausgabe der fünften Information und der Partner-Server 2 verweigert beispielsweise dem Benutzer 5 den Fachzugang. Die separate Übermittlung der ersten und fünften Information vom Partner-Server 2 zum Backend-System 1 und die notwendige Bedingung einer positiven Authentifizierung (Fig. 2 Schritt 22) zur Ausgabe der fünften Information kann vorteilhaft sein, da der Partner-Server 2 die erhaltene Information über das Ergebnis dieser Authentifizierungsprüfung nutzen kann, um zu prüfen, ob der Benutzer 5 zum Zugang zu einem oder mehreren Fächern 40 der Fachanlage 4 autorisiert ist. Beispielsweise kann der Partner-Server 2 feststellen, dass sich der Benutzer 5 in der Nähe der Fachanlage 4 befindet, zu der der Benutzer 5 Zugang erhalten möchte, wenn ein positives Ergebnis der Authentifizierung wie im oberen Abschnitt erläutert auf einer Näheprüfung basiert

Bei beispielhaften Ausführungsformen gemäß aller Aspekte der Erfindung kann die zweite Information mit einem Schlüssel S verschlüsselt sein, wobei der Schlüssel S in der Fachanlage 4 gespeichert ist, wobei der zweiten Vorrichtung 2 und dritten Vorrichtung 3, in dieser beispielhaften Ausführungsform dem Partner-Server 2 und dem Mobilgerät 3, der Schlüssel S nicht bekannt ist. Die Verschlüsselung der zweiten Information erfolgt beispielsweise durch das Backend-System 1. In beispielhaften Ausführungsformen gemäß dem ersten Aspekt der Erfindung, bei denen die zweite Information mit einem Schlüssel S verschlüsselt ist, kann das Verfahren 20 ferner ein Erhalten des Schlüssels S zur verschlüsselten Kommunikation mit der Fachanlage 4 umfassen. Das Erhalten des Schlüssels S erfolgt beispielsweise durch das Backend-System 1. Der Schlüssel S ist als Schlüsselwert für eine Datenkommunikation zwischen dem Backend-System 1 und der Fachanlage 4 mit Weiterleitung durch das Mobilgerät 3 und den Partner-Server 2, also für eine Ende-zu-Ende-Verschlüsselung zwischen dem Backend-System 1 und der Fachanlage 4 vorgesehen. Für diese Ende-zu-Ende-Verschlüsselung der unidirektionalen oder bidirektionalen Datenkommunikation zwischen dem Backend-System 1 und der Fachanlage 4 wird bevorzugt eine symmetrische Verschlüsselung eingesetzt, bei der das Backend-System 1 und die Fachanlage 4 die Nachrichten mit dem Schlüssel S verschlüsseln und entschlüsseln. Als Verfahren für die symmetrische Verschlüsselung wird beispielsweise Advanced Encryption Standard (AES) mit einer beispielhaften Schlüssellänge von 256 Bit eingesetzt Die Datenkommunikation mit der Ende-zu-Ende-Verschlüsselung zwischen dem Backend-System 1 und der Fachanlage 4 erfolgt bevorzugt mit Weiterleitung über das Mobilgerät 3, das unter Steuerung einer auf dem Mobilgerät 3 ausgeführten App Daten von dem Partner-Server 2 empfängt und diese Daten an die Fachanlage 4 überträgt und/oder Daten von der Fachanlage 4 empfängt und diese an den Partner-Server 2 überträgt, und dem Partner-Server 2, der Daten von dem Backend-System 1 empfängt und diese Daten an das Mobilgerät 3 überträgt und/oder Daten von dem Mobilgerät 3 empfängt und diese Daten an das Backend-System 1 überträgt Die Ende-zu-Ende-Verschlüsselung zwischen dem Backend-System 1 und der Fachanlage 4 und die bloße Weiterleitung der verschlüsselten Nachrichten über den Partner-Server 2 und das Mobilgerät 3 sichern die Integrität, Vertraulichkeit und Verbindlichkeit der zwischen dem Backend-System 1 und der Fachanlage 4 ausgetauschten Nachrichten selbst dann, falls die Nahbereich-Datenkommunikationsverbindung 7 zwischen der Fachanlage 4 und dem Mobilgerät 3, die auf dem Mobilgerät 3 ausgeführte App, das Mobilgerät 3, die Fern-Datenkommunikationsverbindung 8 zwischen dem Mobilgerät 3 und dem Partner-Server 2, der Partner-Server 2 und/oder die Fern-Datenkommunikationsverbindung 9 zwischen dem Partner-Server 2 und Backend-System 1 angreiferseitig manipuliert worden sind.

In beispielhaften Ausführungsformen gemäß dem vierten Aspekt der Erfindung, bei denen die zweite Information mit dem Schlüssel S verschlüsselt ist, kann das Verfahren 50 ferner ein Erzeugen einer siebten Information, die mit dem Schlüssel S verschlüsselt ist, und ein Ausgeben der siebten Information umfassen, wobei nachdem die erste Vorrichtung 1, in dieser beispielhaften Ausführungsform das Backend-System 1, die siebte Information erhält, die erste Vorrichtung 1 basierend zumindest auf der entschlüsselten siebten Information eine achte Information erzeugt und an die zweite Vorrichtung 2, in dieser beispielhaften Ausführungsform den Partner-Server 2, ausgibt. Die siebte Information wird beispielsweise durch die Fachanlage 4 erzeugt und enthält beispielsweise Statusinformationen der Fachanlage 4, beispielsweise über die erfolgte Öffnung und/oder die anschließende Schließung eines oder mehrerer Fächer 40 der Fachanlage 4. Die Übertragung der siebten Information erfolgt beispielsweise von der Fachanlage 4 an das Mobilgerät 3 über eine Nahbereich-Datenkommunikationsverbindung 7, von dem Mobilgerät 3 an den Partner-Server 2 über eine Fern-Datenkommunikationsverbindung 8 und anschließend von dem Partner-Server 2 an das Backend-System 1 über eine Fern-Datenkommunikationsverbindung 9, beispielsweise über ein zellulares Mobilfunknetz.

Dazu kann in beispielhaften Ausführungsformen gemäß dem dritten Aspekt der Erfindung, bei denen die zweite Information mit dem Schlüssel S verschlüsselt ist, das Verfahren 40 ferner ein Erhalten der siebten Information, die mit dem Schlüssel S verschlüsselt ist, von der Fachanlage 4 und ein Ausgeben der siebten Information an die zweite Vorrichtung 2, in dieser beispielhaften Ausführungsform den Partner-Server 2, umfassen, wobei nachdem die erste Vorrichtung, 1 in dieser beispielhaften Ausführungsform das Backend-System 1, die siebte Information erhält, die erste Vorrichtung 1 basierend zumindest auf der entschlüsselten siebten Information eine achte Information erzeugt und an die zweite Vorrichtung 2 ausgibt Die Übertragung der siebten Information von der Fachanlage 4 an den Partner-Server 2 erfolgt beispielsweise durch das Mobilgerät 3 bevorzugt über die Nahbereich-Datenkommunikationsverbindung 7 und die Fern-Datenkommunikationsverbindung 8.

Entsprechend kann dazu in beispielhaften Ausführungsformen gemäß dem zweiten Aspekt der Erfindung, bei denen die zweite Information mit dem Schlüssel S verschlüsselt ist, das Verfahren 30 ferner ein Erhalten, von der dritten Vorrichtung 3, in dieser beispielhaften Ausführungsform dem Mobilgerät 3, der siebten Information, die mit dem Schlüssel verschlüsselt ist und ein Ausgeben der siebten Information an die erste Vorrichtung 1, in dieser beispielhaften Ausführungsform das Backend-System 1 umfassen. Die Weiterleitung der verschlüsselten siebten Information erfolgt beispielsweise durch den Partner-Server 2.

Für Ausführungsformen, bei denen eine direkte Datenkommunikationsverbindung zwischen dem Backend-System 1 und der Fachanlage 4 besteht, kann die verschlüsselte siebte Information auch direkt über diese Datenkommunikationsverbindung ohne Weiterleitung durch das Mobilgerät 3 und den Partner-Server 2 übertragen werden.

Entsprechend kann bei beispielhaften Ausführungsformen gemäß dem ersten Aspekt der Erfindung, bei denen die zweite Information mit dem Schlüssel S verschlüsselt ist, das Verfahren 20 ferner ein Erhalten der siebten Information, die mit dem Schlüssel S verschlüsselt ist, ein Erzeugen einer achten Information, basierend zumindest auf der mit dem Schlüssel (S) entschlüsselten siebten Information, und ein Ausgeben der achten Information an die zweite Vorrichtung 2, in dieser beispielhaften Ausführungsform den Partner-Server 2, umfassen. Bei oder nach Erhalt der verschlüsselten siebten Information, entschlüsselt das Backend-System 1 die siebte Information und filtert beispielsweise die Statusinformationen der Fachanlage 4 heraus, die für den Partner-Server 2 bestimmt und/oder relevant sind. Anschließend übermittelt das Backend-System 1 diese Informationen in der achten Information an den Partner-Server 2.

Entsprechend kann in beispielhaften Ausführungsformen gemäß dem zweiten Aspekt der Erfindung, bei denen die zweite Information mit einem Schlüssel S verschlüsselt ist, kann das Verfahren 30 ferner ein Erhalten der achten Information, die zumindest auf der von der ersten Vorrichtung 1 entschlüsselten siebten Information basiert, umfassen. Die achte Information enthält beispielsweise für den Partner-Server 2 relevante Statusinformationen der Fachanlage 4, die von dem Backend-System 1 aus der entschlüsselten siebten Information gefiltert wurden. Basierend auf der achten Information kann die zweite Vorrichtung 2, in dieser beispielhaften Ausführungsform der Partner-Server 2, anschließend eine Statusinformation betreffend eine Belegung von ein oder mehreren Fächern 40 der Fachanlage 4 aktualisieren. Beispielsweise enthält die achte Information die Nachricht, dass ein oder mehrere Fächer der Fachanlage 4 geöffnet wurden und/oder beispielsweise, dass diese wieder geschlossen wurden. Hat der Partner-Server 2 beispielsweise die Öffnung autorisiert, damit der Benutzer 5 eine oder mehrere Sendungen oder ein oder mehrere Objekte aus der Fachanlage 4 entnehmen kann, kann die Statusinformation des betroffenen Fachs oder der betroffenen Fächer 40 beispielweise von belegt auf frei geändert werden. Wurde die Öffnung beispielsweise aufgrund eines Einlegens einer Sendung oder eines Objekts autorisiert, kann die Statusinformation des betroffenen Fachs oder der betroffenen Fächer 40 beispielsweise von frei auf belegt geändert werden. Enthält die achte Information beispielsweise die Nachricht, dass kein Fach geöffnet wurde, kann der Partner-Server 2 erneut einen Öffnungswunsch an das Backend-System 1 übermitteln oder ein Fehlerprotokoll starten.

Bei manchen beispielhaften Ausführungsformen gemäß aller Aspekte der Erfindung erfolgt die Erzeugung des Schlüssels S beispielsweise durch die Fachanlage 4. Der Schlüssel S wird durch die Fachanlage 4 beispielsweise zu dem Zeitpunkt bzw. bei dem Ereignis erzeugt, wenn zwischen der Fachanlage 4 und dem Mobilgerät 3 des Benutzers 5 eine Nahbereich-Datenkommunikationsverbindung, beispielsweise mit optischer Übertragung, Bluetooth, NFC, RFID, WLAN, IrDA oder ZigBee etabliert wird. Der Schlüssel S wird beispielsweise als Zufallswert erzeugt In manchen beispielhaften Ausführungsformen ist der Schlüssel S nur temporär gültig. Die Gültigkeit endet beispielsweise nach dem Verstreichen einer vorgegebenen Zeitdauer, beispielsweise bei Überschreiten einer maximalen Zeitspanne ohne Datenaustausch zwischen der Fachanlage 4 und dem Backend-System 1, wie beispielsweise 2 Minuten, oder nach Abschluss des Prozesses zum Öffnen eines oder mehrerer Fächer 40 der Fachanlage 4, um nur einige Beispiele zu nennen. Durch die zeitlich begrenzte Gültigkeit des zur Verschlüsselung verwendeten temporären Schlüssels wird sichergestellt, dass angreiferseitig mitgeschnittene und zu einem späteren Zeitpunkt wiederholt gesendete Nachrichten wirkungslos verfallen.

Bei manchen beispielhaften Ausführungsformen gemäß aller Aspekte der Erfindung, bei denen die zweite Information verschlüsselt ist, enthält die dritte Information den Schlüssel S. Die Übertragung des Schlüssels S erfolgt beispielsweise durch Übertragung der dritten Information von der Fachanlage 4 an das Mobilgerät 3 über eine Nahbereich-Datenkommunikationsverbindung 7, von dem Mobilgerät 3 an den Partner-Server 2 über eine Fern-Datenkommunikationsverbindung 8 und anschließend von dem Partner-Server 2 an das Backend-System 1 über eine Fern-Datenkommunikationsverbindung 9, beispielsweise über ein zellulares Mobilfunknetz. Vorteilhafterweise ist bei manchen beispielhaften Ausführungsformen der Schlüssel S durch die Fachanlage 4 verschlüsselt, sodass der Partner-Server 2 und das Mobilgerät 3, sowie potenzielle Angreifer keine Kenntnis des Schlüssels S erlangen können.

Bei derartige Ausführungsformen gemäß dem ersten Aspekt der Erfindung kann das Verfahren 20 ferner das Erlangen des Schlüssels S durch Entschlüsseln des verschlüsselten Schlüssels S umfassen. Das Entschlüsseln erfolgt beispielsweise durch das Backend-System 1. Der Schlüssel S wird bevorzugt mittels asymmetrischer kryptographischer Verschlüsselung derart verschlüsseit, dass ein der Fachanlage 4 bekannter, sogenannter öffentlicher Schlüssel des Backend-Systems 1 zur Verschlüsselung des Schlüssels S verwendet wird. Der verschlüsselte Schlüssel S ist mit Hilfe eines sogenannten privaten Schlüssels des Backend-Systems 1 entschlüsselbar.

Unter dem Begriff des öffentlichen Schlüssels des Backend-Systems 1, welcher der Fachanlage 4 bekannt ist, wird verstanden, dass dieser öffentliche Schlüssel mindestens einer der von dem Backend-System 1 verwalteten Fachanlagen bekannt ist Der öffentliche Schlüssel darf aber nur der/den Fachanlagen 4 selbst bekannt sein, da sich andernfalls ein Angreifer mit Kenntnis dieses öffentlichen Schlüssels als Fachanlage 4 ausgegeben kann. Der private Schlüssel des Backend-Systems 1 wird in einer Vorrichtung des Backend-Systems 1 mit strengen Schutzmaßnahmen gegen den Zugriff Unbefugter gespeichert. Der öffentliche Schlüssel des Backend-Systems 1 wird zum Verschlüsseln von Nachrichten verwendet, die nur mit dem privaten Schlüssel des Backend-Systems 1 entschlüsselbar sind. Gemäß dem Konzept der asymmetrischen Verschlüsselung ist der private Schlüssel derart definiert, dass er aus dem öffentlichen Schlüssel gar nicht oder nur mit extrem hohen Zeit- und Berechnungsaufwand berechnet werden kann.

Um den Zugang zu dem öffentlichen Schlüssel des Backend-Systems 1 für Angreifer zu erschweren, ist der öffentliche Schlüssel des Backend-Systems 1 nicht allgemein bekannt oder veröffentlicht, sondern ist beispielsweise in die Firmware der Fachanlage 4 integriert Für jede Firmware-Aktualisierung wird beispielsweise ein neues asymmetrisches Schlüsselpaar erzeugt, mit Integration des öffentlichen Schlüssels des Backend-Systems 1 in der Firmware, wodurch eine regelmäßige Ersetzung des privaten Schlüssels im Backend-System 1 und des öffentlichen Schlüssels in allen durch das Backend-System 1 verwalteten Fachanlagen erzwungen wird, und somit die Sicherheit vor Angriffen mit älteren, möglicherweise bekannt gewordenen Schlüsseln gesteigert wird. Sollte ein externer Entwicklungsdienstleister an der Firmware-Entwicklung beteiligt sein, so erhält dieser vorzugsweise nur Testversionsschlüssel, die im Alltagsbetrieb der Fachanlagen und des Backend-Systems 1, also außerhalb einer begrenzten Testumgebung, wirkungslos sind. Nach der Weitergabe der erstellten Firmware von dem Entwicklungsdienstleister an den Betreiber des Backend-Systems 1 ersetzt der Betreiber die Testversionsschlüssel gegen wirksame bzw. produktive Schlüssel. Ferner kann die Sicherheit durch ein Challenge-Response-Konzept gesteigert werden, das vorsieht, dass das Backend-System 1 eine Challenge-Nachricht bzw. Aufforderungsnachricht mit einem integrierten, möglicherweise verschlüsselten Zeitstempel an die Fachanlage 4 sendet, und dass die Fachanlage 4 als Response-Nachricht bzw. Antwortnachricht den Zeitstempel zurück an das Backend-System 1 schickt. Es kann auch eine Schlüsselverwaltung derart vorgesehen sein, dass jede Fachanlage 4 mit einer individuellen asymmetrischen Verschlüsselung arbeitet (die beispielsweise ebenfalls mit jedem Firmware-Update geändert wird), also jede Fachanlage 4 einer Vielzahl von Fachanlagen, die von dem Backend-System 1 verwaltet werden, einen anderen öffentlichen Schlüssel verwendet, zu dem jeweils ein eigener entsprechender privater Schlüssel im Backend-System 1 gespeichert ist. Für die asymmetrische Verschlüsselung kann beispielsweise das RSA-Verfahren mit einem beispielhaften 2048-Bit-Schlüsselwert verwendet werden.

Um die Sicherheit vor Angriffen zu steigern, wird der Schlüssel S bevorzugt durch eine zweifach asymmetrische kryptographische Verschlüsselung derart verschlüsselt, dass zusätzlich ein zweiter öffentlicher Schlüssel S2 einer fünften Vorrichtung, beispielsweise eines Hardware-Sicherheitsmoduls (HSM), zur Verschlüsselung des bereits durch den öffentlichen Schlüssel S1 des Backend-Systems 1 verschlüsselten Schlüssels S verwendet wird. Dazu kann bei manchen beispielhaften Ausführungsformen gemäß des ersten Aspekts der Erfindung, bei denen der Schlüssel S durch die Fachanlage 4 zweifach asymmetrisch mit zwei öffentlichen Schlüsseln S1 und S2 zweier asymmetrischer Schlüsselpaare S1, S1` und S2, S2' verschlüsselt ist, wobei in der Fachanlage 4 die zwei öffentlichen Schlüssel S1 und S2 gespeichert sind, wobei an der ersten Vorrichtung 1 der private Schlüssel S1` des ersten Schlüsselpaars, aber nicht der private Schlüssel S2' des zweiten Schlüsselpaars bekannt ist, das Verfahren 20 ferner umfassen: ein Übermitteln des zweifach verschlüsselten Schlüssels S an eine fünfte Vorrichtung, die den privaten Schlüssel S2' des zweiten Schlüsselpaars gespeichert hat (aber beispielsweise nicht den privaten Schlüssel S1` des ersten Schlüsselpaars), ein Erhalten, von der fünften Vorrichtung, des einfach verschlüsselten Schlüssels S, den die fünfte Vorrichtung durch (beispielsweise einfaches) Entschlüsseln des zweifach verschlüsselten Schlüssels S unter Verwendung des privaten Schlüssels S2' des zweiten Schlüsselpaars erlangt hat und ein Erlangen des Schlüssels S durch (beispielsweise einfaches) Entschlüsseln des einfach verschlüsselten Schlüssels S unter Verwendung des privaten Schlüssels S1` des ersten Schlüsselpaars.

Der Schlüssel S wird also beispielsweise mittels asymmetrischer kryptographischer Verschlüsselung derart verschlüsselt, dass ein der Fachanlage 4 bekannter, sogenannter öffentlicher Schlüssel S1 eines ersten Schlüsselpaars und ein der Fachanlage 4 bekannter, zweiter sogenannter öffentlicher Schlüssel S2 einer zweiten Schlüsselpaars zur Verschlüsselung des Schlüssels S verwendet wird. Der entsprechende private Schlüssel S1` des ersten Schlüsselpaars S1, S1`, ist im Backend-System 1 gespeichert (insbesondere ausschließlich dort), der entsprechende private Schlüssel S2' des zweiten Schlüsselpaars S2, S2', ist dem Backend-System 1 nicht bekannt, sondern in dem Hardware-Sicherheitsmodul 13 gespeichert (insbesondere ausschließlich dort).

Der verschlüsselte Schlüssel S ist mit Hilfe des privaten Schlüssels S1` des Backend-Systems 1 in Kombination mit dem privaten Schlüssel S2' des Hardware-Sicherheitsmoduls entschlüsselbar. Dazu übermittelt das Backend-System 1 beispielsweise den zweifach asymmetrisch verschlüsselten Schlüssel S an das Hardware-Sicherheitsmodul, das beispielsweise "Decryption-as-a-Service" bereitstellt Dort wird der zweifach asymmetrisch verschlüsselte Schlüssel S unter Verwendung des privaten Schlüssels S2' des Hardware-Sicherheitsmoduls einfach entschlüsselt, und der resultierende einfach verschlüsselte Schlüssel S zurück an das Backend-System 1 übermittelt. Anschließend kann das Backend-System 1 den Schlüssel S erlangen, indem der erhaltene einfach verschlüsselte Schlüssel S mit dem privaten Schlüssel S1` des Backend-Systems 1 entschlüsselt wird. Der private Schlüssel S2' des Hardware-Sicherheitsmoduls wird beispielsweise mit strengen Schutzmaßnahmen gegen den Zugriff Unbefugter gespeichert und ist beispielsweise nicht exportierbar. Der öffentliche Schlüssel S2 des Hardware-Sicherheitsmoduls wird zum Verschlüsseln von Nachrichten verwendet, die nur mit dem privaten Schlüssel S2' des Hardware-Sicherheitsmoduls entschlüsselbar sind. Gemäß dem Konzept der asymmetrischen Verschlüsselung ist der private Schlüssel S2' derart definiert, dass er aus dem öffentlichen Schlüssel S2 gar nicht oder nur mit extrem hohen Zeit- und Berechnungsaufwand berechnet werden kann. Durch die zweifache Verschlüsselung müssen Angreifer sowohl in das Backend-System 1 als auch in das Hardware-Sicherheitsmodul eindringen, um an den Schlüssel S zu gelangen, sodass ein Single-Point-of-Failure ausgeschlossen wird. Indem der Schlüssel im Hardware-Sicherheitsmodul zu jeder Zeit mindestens einmal verschlüsselt ist, bleibt die Integrität der Ende-zu-Ende-Verschlüsselung zwischen Fachanlage 4 und Backend-System 1 erhalten.

Das oben erläuterte Prinzip der doppelt asymmetrischen Verschlüsselung eines von einer Fachanlage erzeugten Schlüssels, der zu einer symmetrischen Verschlüsselung einer Kommunikation zwischen einer ersten Vorrichtung und der Fachanlage genutzt wird, mit zwei in der Fachanlage gespeicherten öffentlichen Schlüsseln, deren entsprechende private Schlüssel in der ersten Vorrichtung und in einer fünften Vorrichtung gespeichert sind, wobei der ersten Vorrichtung nur einer der beiden privaten Schlüssel und der fünften Vorrichtung der andere der beiden privaten Schlüssel bekannt ist (und die erste und die fünfte Vorrichtung wechselseitig keinen Zugriff auf den jeweils in der anderen Vorrichtung gespeicherten privaten Schlüssel haben), soll auch unabhängig und losgelöst von den weiteren Merkmalen der oben beschriebenen Aspekte der Erfindung offenbart verstanden werden, wobei ein oder mehrere der Merkmale dieser Aspekte jedoch auch beispielhaft zu diesem Prinzip zugehörig offenbart verstanden werden sollen.

Bei manchen beispielhaften Ausführungsformen gemäß allen Aspekten der Erfindung, bei denen die vierte Information an die erste Vorrichtung 1, in dieser beispielhaften Ausführungsform das Backend-System 1, übermittelt wird, ist die Fachanlage 4 ferner dazu eingerichtet einen neuen Schlüssel zu erzeugen, wobei der neue Schlüssel S_neu und eine Information, die zumindest auf der vierten Information basiert, insbesondere zusammen, von der zweiten Vorrichtung 2, in dieser beispielhaften Ausführungsform dem Partner-Server 2, an die erste Vorrichtung 1 ausgegeben wird, wobei basierend auf dieser Information die erste Vorrichtung 1 den Schlüssel S durch den neuen Schlüssel S_neu ersetzt. Die Erzeugung eines neuen Schlüssels erfolgt beispielsweise nach einer Unterbrechung der Nahbereich-Datenkommunikationsverbindung 7 zwischen der Fachanlage 4 und dem Mobilgerät 3 oder aufgrund einer Zeitüberschreitung an der Fachanlage 4. Der neue Schlüssel S_neu wird von der Fachanlage 4 über das Mobilgerät 3 an den Partner-Server 2 übermittelt. Der Partner-Server 2 übermittelt den neuen Schlüssel S_neu beispielsweise zusammen mit der Sitzungs-ID an das Backend-System 1. Das Backend-System 1 identifiziert die zugehörige Sitzung durch die Sitzungs-ID und kann beispielsweise durch das Vorhandensein des zuvor verwendeten Schlüssels S feststellen, dass der Authentifizierungsprozess des Partner-Servers 2 gegenüber dem Backend-System 1 bereits abgeschlossen ist. Das Backend-System 1 tauscht den der Sitzung entsprechenden Schlüssel S durch den neuen Schlüssel S_neu aus. Somit ist keine erneute Übermittlung der Authentifizierungsinformationen (Fig. 2 Schritt 21 bzw. Fig. 3 Schritt 33) und Prüfung der Authentifizierung des Partner-Servers 2 (Fig. 2 Schritt 22) notwendig.

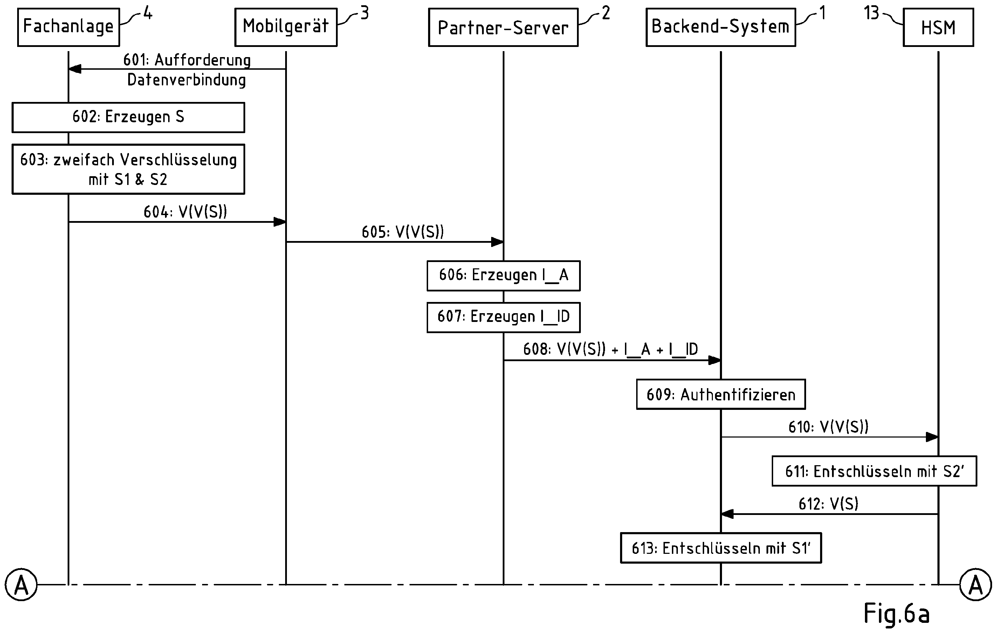

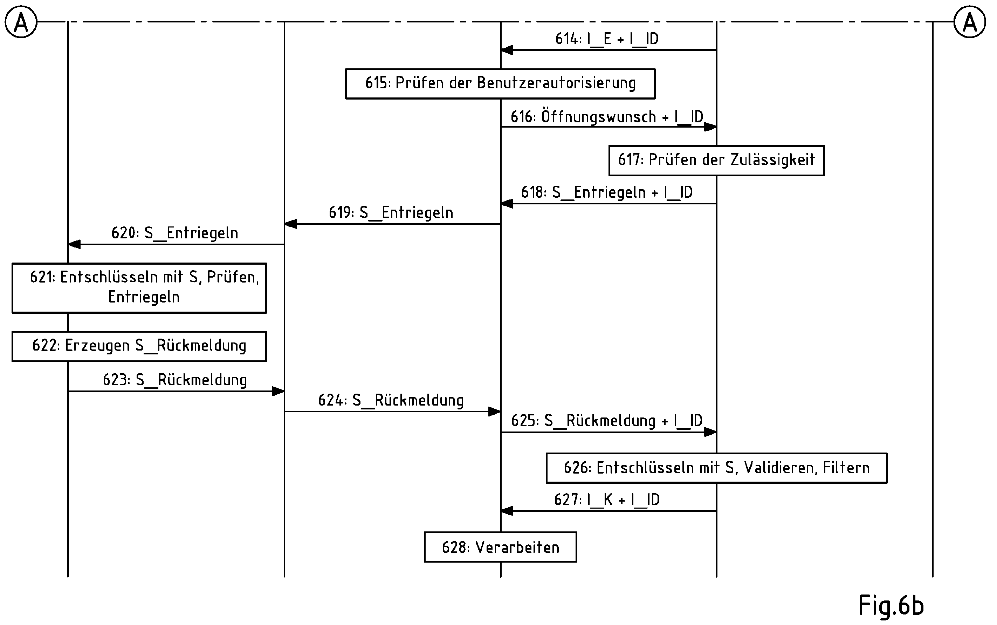

Fig. 6 (aufgeteilt in Fig. 6a und Fig. 6b) ist ein Flussdiagramm einer beispielhaften Ausführungsform eines Verfahrens gemäß der vorliegenden Erfindung mit einer detaillierten Veranschaulichung einzelner Schritte und des damit jeweils verbundenen Datenaustausches zwischen dem Backend-System 1, dem Partner-Server 2, dem Mobilgerät 3, der Fachanlage 4 und einem Hardware-Sicherheitsmodul (HSM) 13.

Im Schritt 601 bedient der Benutzer 5 die auf dem Mobilgerät 3 ausgeführte App, um Zugang zu einem oder mehreren Fächern 40 der Fachanlage 4 zu erhalten. Konkret richtet das Mobilgerät 3 im Schritt 601 eine Aufforderung an die Fachanlage 4 zum Etablieren einer Nahbereich-Datenkommunikationsverbindung, wie beispielsweise optischer Übertragung, Bluetooth, ZigBee, NFC, RFID oder WLAN, wie sie in Fig. 1 mit der mit Bezugszeichen 7 versehenen Verbindungslinie veranschaulicht ist.

Bei erfolgreichem Etablieren bzw. Zustandekommen der Nahbereich-Datenkommunikationsverbindung zwischen dem Mobilgerät 3 und der Fachanlage 4, erzeugt die Fachanlage 4 einen zufälligen temporären Schlüssel S im Schritt 602. Der temporäre Schlüssel S wird anschließend im Schritt 603 durch die Fachanlage 4 einer zweifach asymmetrischen Verschlüsselung, beispielsweise mit RSA mit zwei 2048-Bit-Schlüsseln S1 und S2, unterzogen. Die zwei dazu erforderlichen öffentlichen Schlüssel zweier asymmetrischer Schlüsselpaare sind dazu in der Fachanlage 4 gespeichert worden, beispielsweise bei deren Herstellung oder Inbetriebnahme, oder beim Aufspielen der Firmware oder beim letzten Firmware-Update. Der entsprechende private Schlüssel S1` des ersten Schlüsselpaars S1, S1` ist im Backend-System 1 gespeichert, der entsprechende private Schlüssel S2' des zweiten Schlüsselpaars S2, S2' ist dem Backend-System 1 nicht bekannt, sondern in dem Hardware-Sicherheitsmodul 13 gespeichert. Im Schritt 604 wird der zweifach verschlüsselte Schlüssel V(V(S)) von der Fachanlage 4 als dritte Information über die etablierte Nahbereich-Datenkommunikationsverbindung an das Mobilgerät 3 übertragen.

In Schritt 605 überträgt das Mobilgerät 3 den verschlüsselten Schlüssel V(V(S)) an den Partner-Server 2 über eine bereits etablierte oder nun zu etablierende Fern-Datenkommunikationsverbindung. In Schritt 606 und 607 erzeugt der Partner-Server 2 eine Sitzungs-ID I_ID und seine Authentisierungsinformation I_A, beispielsweise eine Signatur. Die Schritte 606, 607 und 608 können ohne Weiteres in einer anderen Reihenfolge durchgeführt werden. Anschließend überträgt der Partner-Server im Schritt 608 den verschlüsselten Schlüssel V(V(S)), sowie seine Authentisierungsinformation I_A als erste Information und die Sitzungs-ID I_ID als vierte Information an das Backend-System 1. Anschließend führt das Backend-System 1 den Prozess zum Authentifizieren des Partner-Servers 2 durch. Dazu wird in Schritt 609 geprüft, ob die von dem Partner-Server 2 übertragene Authentisierungsinformation I_A mit den im Backend-System 1 für den Partner 6 gespeicherten Authentifizierungsinformationen übereinstimmt, auf diese abgebildet werden kann oder zu diesen korrespondiert.

Wenn das Backend-System 1 bei der Durchführung des Prozesses zum Authentifizieren des Partners 6 in Schritt 609 feststellt, dass die übermittelte Authentisierungsinformation I_A mit den gespeicherten Authentifizierungsinformationen übereinstimmt oder zu ihnen korrespondiert, dann erfolgt die Authentifizierung des Partners 6 durch das Backend-System 1. Zum Etablieren eines sicheren Datenaustauschs, mit einer symmetrischen Ende-zu-Ende-Verschlüsselung mit dem Schlüssel S (beispielsweise mittels AES mit einem 256-Bit-Schlüssel) zwischen dem Backend-System 1 und der Fachanlage 4 während der aktuellen Sitzung bzw. der aktuellen Authentifizierung übermittelt das Backend-System 1 in Schritt 610 den von dem Partner-Server 2 empfangenen, zweifach asymmetrisch verschlüsselten Schlüssel V(V(S)) an das Hardware-Sicherheitsmodul 13. Dieses entschlüsselt den zweifach asymmetrisch verschlüsselten Schlüssel V(V(S)) zunächst in Schritt 611 mit Hilfe des privaten Schlüssels S2' des Hardware-Sicherheitsmoduls 13 und übermittelt anschließend in Schritt 612 den erhaltenden einfach verschlüsselten Schlüssel V(S) an das Backend-System 1. Anschließend entschlüsselt das Backend-System 1 zunächst in Schritt 613 den von dem Hardware-Sicherheitsmodul 13 empfangenen, asymmetrisch verschlüsselten Schlüssel V(S) mit Hilfe des privaten Schlüssels S1` des Backend-Systems 1, um den Schlüssel S zu erhalten. Anschließend überträgt das Backend-System 1 in Schritt 614 eine Information über die erfolgreiche Sitzungsherstellung I_E zusammen mit der Sitzungs-ID I_ID zur Zuordnung der Information I_E an den Partner-Server 2. Dazu wird die Information von dem Backend-System 1 über die Fern-Datenkommunikationsverbindung 9 an den Partner-Server 2 übertragen.

In einem internen Prozess in Schritt 615 prüft der Partner-Server 2 beispielsweise, ob der Benutzer 5 Zugang zu einem oder mehreren von ihm verwalteten Fächern 40 der Fachanlage 4 autorisiert ist Die Prüfung kann beispielsweise auch mit Hilfe der vom Backend-System 1 empfangenen Information I_E erfolgen, indem der Partner 6 beispielsweise bei erfolgreicher Sitzungsherstellung sicherstellen kann, dass das Mobil-Gerät 3 sich in der Nähe der Fachanlage 4 befindet, da nur dann die Fachanlage 4 den Sitzungsschlüssel S erzeugt und ausgibt, wie in Schritt 602 erläutert. Ist das Ergebnis einer partnerseitigen Prüfung, dass das Fach oder mehrere Fächer 40 der Fachanlage 4 für den Benutzer 5 geöffnet werden soll, wird vom Partner-Server 2 in Schritt 616 ein Öffnungswunsch zusammen mit der Sitzungs-ID I_ID an das Backend-System 1 übermittelt Anschließend prüft das Backend-System 1, ob der Öffnungswunsch der Partners 6 zulässig ist, beispielsweise ob der Partner 6 das Fach oder mehrere Fächer 40 der Fachanlage 4 verwaltet

Falls die Prüfung ergibt, dass Öffnungswunsch des Partners 6 berechtigt ist, übermittelt das Backend-System 1 in den Schritten 618 bis 620 einen mit dem Schlüssel S verschlüsselten und/- oder mit diesem Schlüssel signierten Befehl S_Entriegeln an die Fachanlage 4 zum Entriegeln eines Fachs oder mehrerer Fächer 40. Der verschlüsselte bzw. signierte Befehl S_Entriegeln wird zunächst im Schritt 618 zusammen mit der Sitzungs-ID I_ID von dem Backend-System 1 über die Fern-Datenkommunikationsverbindung 9 an den Partner-Server 2 übertragen. Der Partner-Server 2 überträgt in Schritt 619 den verschlüsselten bzw. signierten Befehl S_Entriegeln über die Fern-Datenkommunikationsverbindung 8 an das Mobilgerät 3, und anschließend überträgt das Mobilgerät 3 im Schritt 620 den verschlüsselten bzw. signierten Befehl S_Entriegeln über die Nah-Datenkommunikationsverbindung 7 an die Fachanlage 4. Für Ausführungsformen, bei denen eine direkte Datenkommunikationsverbindung zwischen dem Backend-System 1 und der Fachanlage 4 besteht, kann der verschlüsselte bzw. signierte Befehl S_Entriegeln auch direkt über diese Datenkommunikationsverbindung ohne Weiterleitung durch den Partner-Server 2 und das Mobilgerät 3 übertragen werden. Nachdem die Fachanlage 4 den verschlüsselten bzw. signierten Befehl S_Entriegeln erhalten hat, entschlüsselt die Fachanlage 4 in Schritt 621 ihn mit dem Schlüssel S und/oder prüft die Authentizität/Integrität des Befehls S_Entriegeln anhand seiner Signatur mit dem Schlüssel S und entriegelt (beispielsweise nur im Falle einer erfolgreichen Entschlüsselung des Befehls S_Entriegeln und/oder einer Prüfung der Authentizität/Integrität des Befehls S_Entriegeln mit positivem Ergebnis) das oder die spezifizierten Fächer, sodass der Benutzer 5 Zugang zu dem Fach oder Fächern 40 erhält

Anschließend generiert die Fachanlage 4 in Schritt 622 eine Rückmeldung für das Backend-System 1, verschlüsselt und/oder signiert diese Rückmeldung mit dem Schlüssel S zu S_Rückmeldung und überträgt die verschlüsselte bzw. signierte Rückmeldung in den Schritten 623 bis 625 von der Fachanlage 4 über das Mobilgerät 3 und der Partner-Server 2 an das Backend-System 1. Dabei übermittelt der Partner-Server 2 in Schritt 625 parallel zur Nachricht S_Rückmeldung die Sitzungs-ID I_ID, damit die erhaltene Information durch das Backend-System 1 der Sitzung zugeordnet werden kann. Für Ausführungsformen, bei denen eine direkte Datenkommunikationsverbindung zwischen dem Backend-System 1 und der Fachanlage 4 besteht, kann die verschlüsselte bzw. signierte Meldung S_Rückmeldung auch direkt über diese Datenkommunikationsverbindung ohne Weiterleitung durch das Mobilgerät 3 und den Partner-Server 2 übertragen werden. In Schritt 626 empfängt das Backend-System 1 die Nachricht S_Rückmeldung, entschlüsselt sie mit dem Schlüssel S und/oder prüft die Authentizität/Integrität des Befehls S_Rückmeldung anhand der Signatur mit dem Schlüssel S, und generiert eine entsprechende Klartextmeldung I_K basierend auf den Informationen, die in S_Rückmeldung enthalten sind. In Schritt 627 wird die Klartextmeldung anschließend zusammen mit der Sitzungs-ID I_ID an den Partner-Server 2 übertragen. Dort kann in Schritt 628 die Klartextmeldung I_K z.B. genutzt werden, um die gespeicherte aktuelle Belegung der Fächer 40 der Fachanlage 4 mit der Benutzer-Fach-Zuordnung unter Berücksichtigung der aktuellen Änderung der Fachbelegung zu aktualisieren.

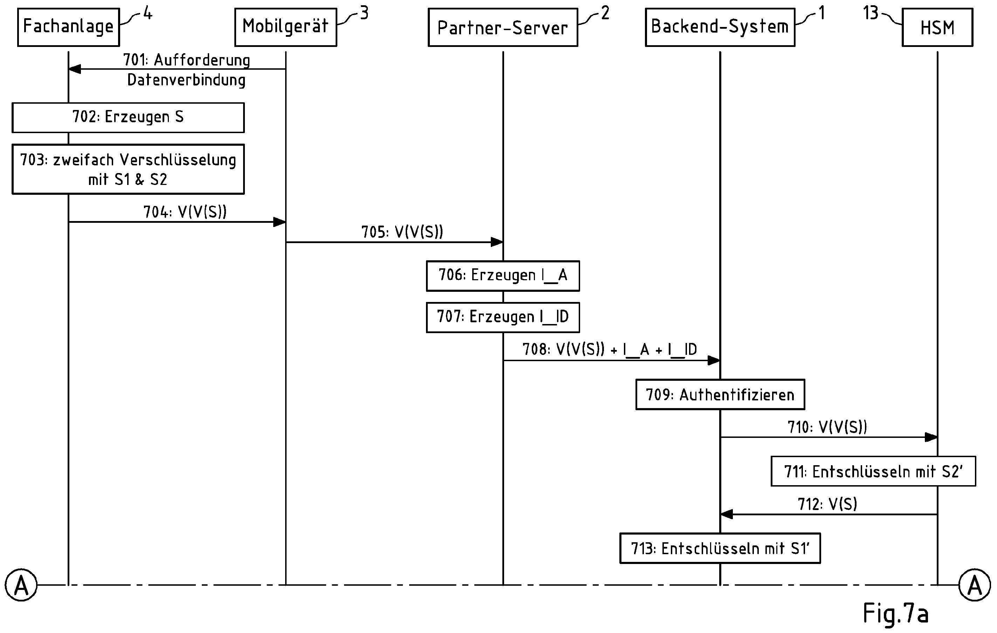

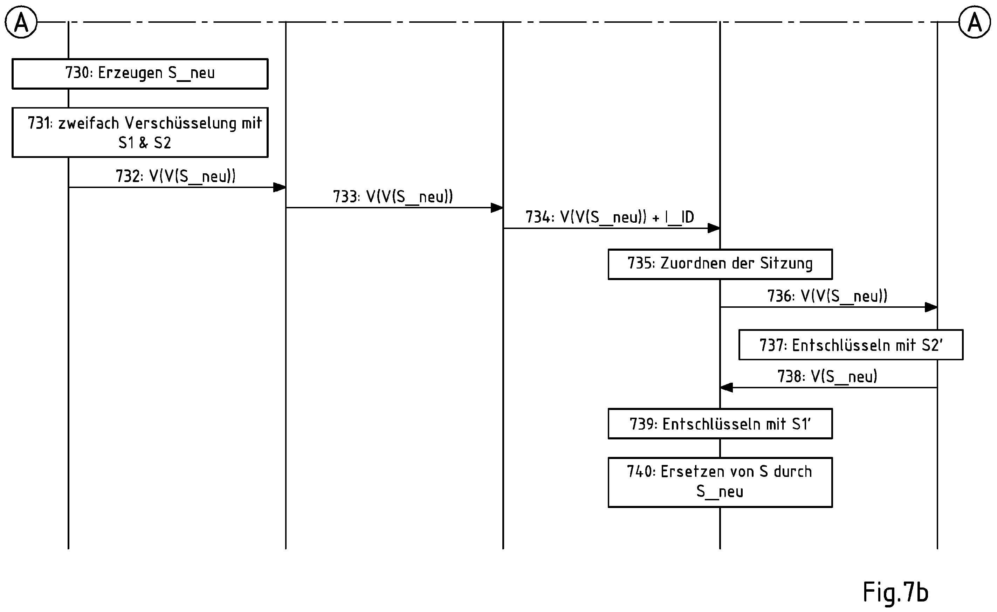

Fig. 7 (aufgeteilt in Fig. 7a und Fig. 7b) ist ein Flussdiagramm einer beispielhaften Ausführungsform eines Verfahrens gemäß der vorliegenden Erfindung mit einer detaillierten Veranschaulichung einzelner Schritte, wobei die Schritte 701 bis 713 den in Fig. 6 veranschaulichten Schritten 601 bis 613 entsprechen, wobei mit dem Übergang von Fig. 6 zu Fig. 7 für identische bzw. sich entsprechende Schritte die führende Ziffer der Schrittnummerierung von 6 zu 7 verändert wurde. Im Folgenden wird die in Fig. 7 veranschaulichte beispielhafte Ausführungsform des Verfahrens hauptsächlich anhand der Unterschiede zu der in Fig. 6 beispielhaft veranschaulichten Ausführungsform erläutert werden.

Nachdem die Initialisierung der Sitzung in den Schritten 701 bis 713 erfolgreich abgeschlossen wurde, kann es an einem beliebigen Punkt des Verfahrens, das in Fig. 6 erläutert wurde (Schritte 614 - 627), dazu kommen, dass die Fachanlage 4 einen neuen Schlüssel (S_neu) in Schritt 730 erzeugt, diesen in Schritt 731 zweifach asymmetrisch verschlüsselt und in Schritt 732 entsprechend den neuen zweifach asymmetrisch verschlüsselten Schlüssel V(V(S_neu)) an das Mobilgerät 3 übertragt Die Erzeugung eines neuen Schlüssels (S_neu) erfolgt beispielsweise nach einer Unterbrechung der Nahbereich-Datenkommunikationsverbindung 7 zwischen der Fachanlage 4 und dem Mobilgerät 3 oder nach Verwerfen des nur temporär gültigen Schlüssels (S) aufgrund einer Zeitüberschreitung an der Fachanlage 4. Das Mobilgerät 3 übermittelt anschließend in Schritt 733 V(V(S_neu)) an den Partner-Server 2, welcher ihn in Schritt 734 zusammen mit der Sitzungs-ID I_ID an das Backend-System 1 übermittelt. Durch die Sitzungs-ID I_ID kann das Backend-System 1 in Schritt 735 den Schlüssel einer aktuellen Sitzung zuordnen und feststellen, dass die Initialisierung der Sitzung bereits abgeschlossen und ein alter Schlüssel (S) vorhanden ist. Entsprechend der Schritten 710 bis 713 erlangt das Backend-System 1 in den Schritten 736 bis 739 den neuen Schlüssel (S_neu) und ersetzt in Schritt 740 den bisher verwendeten, alten Schlüssel (S) durch den neuen Schlüssel (S_neu), der anschließend für die Ende-zu-Ende-Verschlüsselung der Datenkommunikation zwischen Backend-System 1 und Fachanlage 4 genutzt wird. Anschließend kann das Verfahren, wie in Fig. 6 erläutert, ohne Änderung fortgeführt werden, beispielsweise durch Übertragung des Öffnungswunschs in Schritt 616.

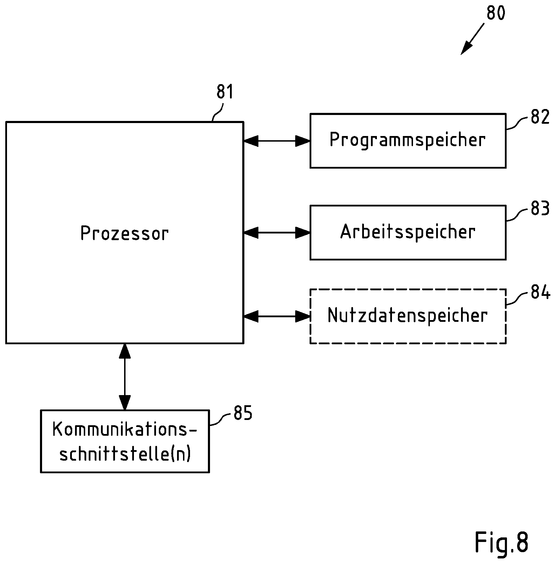

Fig. 8 zeigt eine schematische Darstellung einer beispielhaften Ausführungsform einer Vorrichtung gemäß dem ersten oder zweiten Aspekt der Erfindung, beispielsweise einem Backend-System 1 oder einem Partner-Server 2.

Die Vorrichtung 80 umfasst einen Prozessor 81, einen Programmspeicher 82, einen Arbeitsspeicher 83, einen optionalen Nutzdatenspeicher 84 sowie eine oder mehrere Kommunikations-schnittelle(n) 85. Der Prozessor führt beispielsweise ein Programm gemäß dem ersten oder zweiten Aspekt der Erfindung aus, das in dem Programmspeicher 82 gespeichert ist, beispielsweise als Firmware. Der Arbeitsspeicher 83 dient insbesondere der Speicherung temporärer Daten während des Ablaufs des Programms.

Der Nutzdatenspeicher 84 dient der Speicherung von Daten, die bei der Abarbeitung des Programms erforderlich sind. Vorliegend kann es sich dabei beispielsweise um eine erste und/oder zweite Informationen und/oder dritte Information handeln.

Bei einer beispielhaften Ausführungsform, in der es sich bei der Vorrichtung 80 um eine Vorrichtung, die das Verfahren gemäß dem ersten Aspekt der Erfindung ausführt, handelt, speichert die Vorrichtung 80 im Nutzdatenspeicher 84 ein oder mehrere Authentifizierungsinformationen. Darüber hinaus können weitere Informationen im Nutzdatenspeicher 84 gespeichert sein. Beispielsweise speichert die Vorrichtung 80 Daten zur Verwaltung von Fächern 40 einer oder mehrerer Fachanlagen 4 und/oder zu Partnern 6. Der Nutzdatenspeicher 84 enthält zudem beispielsweise Informationen über eine Vielzahl von Fachanlagen 4 und z.B. Informationen darüber, wann und/oder wie die Vorrichtung 80 mit den Fachanlagen 4 kommunizieren kann. Das betrifft beispielsweise das Ausgeben der zweiten Information.

Insbesondere in der hier beschriebenen beispielhaften Ausführungsform kann/können die Kommunikationsschnittstelle(n) 85 zumindest eine Schnittstelle zur Kommunikation mit anderen Einheiten des Systems umfassen, insbesondere mit dem Partner-Server 2 oder der Fachanlage 4. Diese Kommunikation kann beispielsweise auf dem Internet Protocol (IP) basieren. Beispielsweise ist dazu zumindest eine der Kommunikationsschnittstelle(n) 85 als Local Area Network (LAN) Schnittstelle ausgeführt Die Kommunikationsverbindung kann aber auch ganz oder teilweise funkbasiert sein.

Bei einer beispielhaften Ausführungsform, in der es sich bei der Vorrichtung 80 um eine Vorrichtung, die das Verfahren gemäß dem zweiten Aspekt der Erfindung ausführt, handelt, speichert die Vorrichtung 80 im Nutzdatenspeicher 84 beispielsweise die erste Information. Der Nutzdatenspeicher 84 enthält zudem beispielsweise Informationen über eine Vielzahl von Fachanlagen 4, deren jeweiligen Inhalten, zu Benutzern 5 wie Einstellern und Abholern, und/oder zur Kommunikation mit den Benutzern 5.

In dieser beispielhaften Ausführungsform kann/können die Kommunikationsschnittstelle(n) 85 ebenfalls zumindest eine Schnittstelle zur Kommunikation mit anderen Einheiten des Systems umfassen, insbesondere mit dem Backend-Server 1 und dem Mobilgerät 3. Diese Kommunikation kann beispielsweise auf dem Internet Protocol (IP) basieren. Beispielsweise ist dazu zumindest eine der Kommunikationsschnittstelle(n) 85 als Local Area Network (LAN) Schnittstelle ausgeführt Die Kommunikationsverbindung kann aber auch in diesem Ausführungsbeispiel ganz oder teilweise funkbasiert sein.

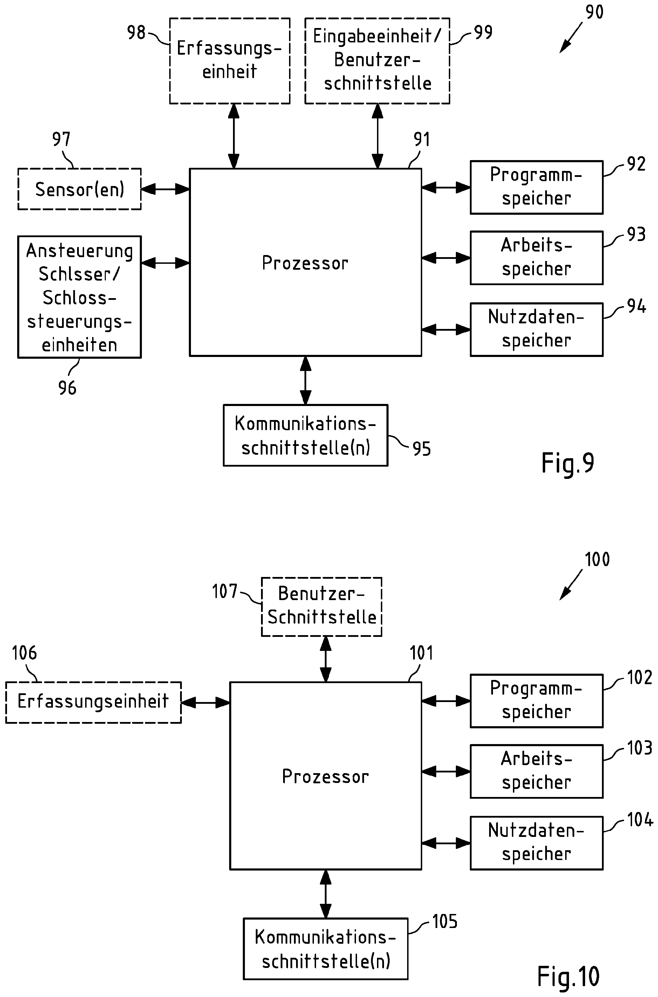

Fig. 9 zeigt eine schematische Darstellung einer beispielhaften Ausführungsform einer Vorrichtung gemäß dem vierten Aspekt der Erfindung, beispielsweise einer Fachanlage 4 oder deren Steuereinheit

Die Vorrichtung 90 umfasst einen Prozessor 91, einen Programmspeicher 92, einen Arbeitsspeicher 93, einen Nutzdatenspeicher 94, eine oder mehrere Kommunikationsschnittelle(n) 95, eine Ansteuerungseinheit 96 für die Schlösser oder Schlosssteuereinheiten der Fächer 40 der Fachanlage 4, einen oder mehrere optionale Sensoren 97, eine optionale Erfassungseinheit 98 und eine optionale Eingabeeinheit/Benutzerschnittstelle 99. Der Prozessor 91 führt beispielsweise ein Programm gemäß dem vierten Aspekt der Erfindung aus, das in dem Programmspeicher 92 gespeichert ist, beispielsweise als Firmware. Arbeitsspeicher 93 dient insbesondere der Speicherung temporärer Daten während des Ablaufs dieses Programms.

Der Nutzdatenspeicher 94 dient der Speicherung von Daten, die bei der Abarbeitung des Programms erforderlich sind. Vorliegend kann es sich dabei beispielsweise um die erhaltene zweite Information, die zur Verschlüsselung des Sitzungsschlüssels S genutzten, öffentlichen Schlüssel und/oder den Sitzungsschlüssel S handeln.

Die Kommunikationsschnittstelle(n) 95 umfasst/umfassen beispielsweise eine Schnittstelle zur drahtlosen Kommunikation mit der Vorrichtung 3, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). In manchen Ausführungsformen ist die Vorrichtung 90 beispielsweise ferner zur direkten Kommunikation mit der Vorrichtung 1 eingerichtet, verfügt also beispielsweise über eine Kommunikationsschnittstelle, die einen Zugang zum Internet oder zu einem anderen Netz, an das die Vorrichtung 1 angeschlossen ist, ermöglicht

Die Ansteuerungseinheit 96 ermöglicht es, ein einzelnes Fach 40 der Fachanlage 4 gezielt zu öffnen oder zu entriegeln, um die Öffnung zu ermöglichen, insbesondere durch Ansteuerung des Schlosses des Fachs 40 oder einer Schlosssteuereinheit des Fachs 40. Zusätzlich oder alternativ kann die Verriegelung eines Fachs 40 bewirkt werden (beispielsweise wenn das Fach 40 bei Schließen der Tür des Fachs 40 nicht automatisch/mechanisch wieder verriegelt ist). Die Ansteuerungseinheit 96 ist beispielsweise über eine jeweilige Verdrahtung mit allen Schlössern oder Schlosssteuereinheiten der Fachanlage 4 verbunden oder an einen Bus angeschlossen, an dem auch alle Schlösser oder Schlosssteuereinheiten der Fachanlage 4 angebunden sind.

Die Sensoren 97 sind optional und beispielsweise fachspezifisch. Ein Sensor ermöglicht es beispielsweise zu detektieren, ob sich in einem jeweiligen Fach 40 eine jeweilige Sendung oder ein jeweiliges Objekt befindet, ob in das Fach 40 eine Sendung oder ein Objekt eingelegt (z.B. eingestellt) und/oder dem Fach 40 entnommen wird/wurde und/oder ob die Tür des Fachs 40 offen oder zu ist

Die Erfassungseinheit 98 ist optional und in einer beispielhaften Ausführungsform ein Scanner, welcher optisch Informationen erfassen kann, z.B. einen Bar- oder QR-Code, z.B. von einem Bildschirm einer mobilen Vorrichtung 3. Die Erfassungseinheit 98 kann zusätzlich oder alternativ in der Lage sein, akustische Signale zu erfassen und zu verarbeiten, also z.B. mittels Spracherkennung.

Die Eingabeeinheit/Benutzerschnittstelle 99 ist optional und zur Kommunikation mit einem Benutzer 5 eingerichtet Die Einrichtung kann dabei beispielsweise eine Ausgabeeinheit zum Anzeigen (z.B. über einen Bildschirm oder über fachspezifische Leuchtanzeigen (z.B. zur Darstellung eines jeweiligen Zustands belegt/unbelegt) oder akustischen Ausgeben von Informationen und/oder eine Einheit zum Erhalten von Informationen und/oder Daten (z.B. eine Tastatur oder einen berührungsempfindlichen Bildschirm mit Bildschirmtastatur oder ein Spracherkennungsmodul) von den Personen umfassen. Bevorzugt ist jedoch keine Eingabeeinheit/Benutzerschnittstelle 99 vorgesehen und der Benutzer 5 kommuniziert lediglich über das Mobilgerät 3 mit der Fachanlage 4, um beispielsweise den diesbezüglichen Wartungs- und/oder Reparaturaufwand (z.B. aufgrund von Vandalismus) und/oder die Herstellungskosten zu verringern.

Fig. 10 zeigt eine schematische Darstellung einer beispielhaften Ausführungsform einer Vorrichtung gemäß dem dritten Aspekt der Erfindung, beispielsweise einer mobilen Vorrichtung 3. Die Vorrichtung 100 kann beispielsweise ein Mobiltelefon oder ein portables Scangerät eines Zustellers/Lieferanten darstellen (einen sog. Handscanner), also ein Gerät, das zur optischen Erfassung von Sendungs- oder Lieferungsdaten, insbesondere in Form von 2D- oder 3D-Barcodes, von der Sendung oder Lieferung eingerichtet ist Wenn die Vorrichtung 100 das Gerät des Benutzers 5 repräsentiert, kann es sich dabei insbesondere um ein Mobilgerät 3 handeln, also insbesondere um ein Mobiltelefon mit der Fähigkeit, auch komplexere Programme, sog. Apps, selbstständig auszuführen.

Die Vorrichtung 100 umfasst einen Prozessor 101, einen Programmspeicher 102, einen Arbeitsspeicher 103, einen Nutzdatenspeicher 104, eine oder mehrere Kommunikationsschnittelle(n) 105, eine optionale Erfassungseinheit 106 zur Erfassung von Informationen und eine optionale Benutzerschnittstelle 107.

Der Prozessor 101 führt beispielsweise ein Programm gemäß dem dritten Aspekt der Erfindung aus, das in dem Programmspeicher 102 gespeichert ist, beispielsweise als App oder als Firmware. Arbeitsspeicher 103 dient insbesondere der Speicherung temporärer Daten während des Ablaufs des Programms.

Der Nutzdatenspeicher 104 dient der Speicherung von Daten, die bei der Abarbeitung des Programms erforderlich sind, beispielsweise einer oder mehrerer dritter Informationen.

Die Kommunikationsschnittstelle(n) 105 umfassen eine oder mehrere Schnittstellen zur Kommunikation der Vorrichtung 100 mit der Vorrichtung 2. Die Schnittstelle kann beispielsweise auf IP beruhen, aber sich aufgrund der Portabilität der Vorrichtung 100 einer drahtlosen Übertragungstechnik als physikalischer Schicht bedienen, die beispielsweise auf zellularem Mobilfunk (z.B. GSM, E-GSM, UMTS, LTE, 5G) oder WLAN beruht Die Kommunikationsschnittstelle(n) 105 umfassen optional ferner eine Schnittstelle zur Kommunikation mit der Fachanlage 4, beispielsweise basierend auf optischer Übertragung, Bluetooth, ZigBee, NFC, RFID, WLAN oder IrDA. Hier kann eine Übertragungstechnik mit verhältnismäßig geringer Reichweite, beispielsweise weniger als 100m oder 10m oder 5m ausreichend und ggf. sogar erwünscht sein, um ein Abhören der Übertragung durch Dritte zu erschweren.

Die Benutzerschnittstelle 107 kann als Bildschirm und Tastatur oder als berührungsempfindliche Anzeige (Touchscreen) ausgestaltet sein, ggf. mit zusätzlichen akustischen und/oder haptischen Signalgebungseinheiten. Die Anzeige einer zweiten Information über die Benutzerschnittstelle 107 kann eine gesonderte Schnittstelle 107 zur Kommunikation mit der Fachanlage 4 unnötig machen, wenn die zweite Information in eine Benutzerschnittstelle der Fachanlage 4 eingegeben werden kann (siehe Benutzerschnittstelle 99 der Fig. 9). Die Erfassungseinheit 106 zur Erfassung einer ersten Information und/oder eines Hashwerts (beispielsweise in Form einer optischen Scaneinheit) ist beispielsweise lediglich optional vorhanden.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden Ausführungsbeispiele werden als Teil der vorliegenden Offenbarung offenbart:
Ausführungsbeispiel 1:
   Ein Verfahren, beispielsweise durchgeführt an einer ersten Vorrichtung (1), das Verfahren umfassend:
   - Erhalten (21) einer ersten Information von einer zweiten Vorrichtung (2), wobei die erste Information mit der zweiten Vorrichtung (2) assoziiert ist;
   - Authentifizieren (22) der zweiten Vorrichtung (2) basierend auf zumindest der ersten Information;
   - Erzeugen (23) einer zweiten Information, wobei unter Verwendung der zweiten Information eine dritte, von der zweiten Vorrichtung (2) verschiedene Vorrichtung (3) oder ein Nutzer (5) der dritten Vorrichtung (3) Zugang zu einem oder mehreren Fächern (40) einer Fachanlage (4) erhalten kann; und
   - Ausgeben (24) der zweiten Information, wobei ein positives Ergebnis des Authentifizierens (22) der zweiten Vorrichtung (2) notwendige Bedingung für das Ausgeben (24) der zweiten Information ist
Ausführungsbeispiel 2:
   Ein Verfahren nach Ausführungsbeispiel 1, wobei die zweite Information an die zweite Vorrichtung (2) ausgegeben wird.
Ausführungsbeispiel 3:
   Ein Verfahren nach einem der vorherigen Ausführungsbeispielen, ferner umfassend:
   - Erhalten einer dritten Information von der zweiten Vorrichtung (2), wobei die dritte Information mit der Fachanlage (4) assoziiert ist
Ausführungsbeispiel 4:
   Ein Verfahren nach einem der vorherigen Ausführungsbeispiele, ferner umfassend:
   - Erhalten einer vierten Information von der zweiten Vorrichtung (2), wobei die vierte Information mit der dritten Vorrichtung (3) assoziiert ist und wobei nach Erhalten der vierten Information zumindest eine Information, die zwischen der ersten Vorrichtung (1) und der zweiten Vorrichtung (2) übertragen wird, zumindest auf der vierten Information basiert.
Ausführungsbeispiel 5:
   Ein Verfahren nach einem der vorherigen Ausführungsbeispielen, ferner umfassend:
   - Erhalten einer fünften Information von der zweiten Vorrichtung (2), wobei das Erhalten der fünften Information eine weitere notwendige Bedingung für das Ausgeben (24) der zweiten Information ist
Ausführungsbeispiel 6:
   Ein Verfahren nach einem der vorhereigen Ausführungsbeispielen, ferner umfassend:
   - Erzeugen einer sechsten Information, wobei die sechste Information auf einem Ergebnis des Authentifizierens (22) der zweiten Vorrichtung (2) basiert; und
   - Ausgeben der sechsten Information an die zweite Vorrichtung (2).
Ausführungsbeispiel 7:
   Ein Verfahren, beispielsweise durchgeführt an einer zweiten Vorrichtung (2), umfassend:
   - Erhalten (31) einer dritten Information von einer dritten Vorrichtung (3);
   - Erzeugen (32) einer ersten Information, wobei die erste Information mit der zweiten Vorrichtung (2) assoziiert ist; und
   - Ausgeben (33) der ersten Information an einer ersten Vorrichtung (1), um der ersten Vorrichtung (1) ein Authentifizieren (22) der zweiten Vorrichtung (2) basierend auf zumindest der ersten Information zu ermöglichen, wobei ein positives Ergebnis des Authentifizierens notwendige Bedingung für ein Ausgeben (24) einer zweiten Information von der ersten Vorrichtung (1) ist, wobei unter Verwendung der zweiten Information eine dritte Vorrichtung (3) oder ein Nutzer (5) der dritten Vorrichtung (3) Zugang zu einem oder mehreren Fächern (40) einer Fachanlage (4) erhalten kann, und wobei das Erhalten (31) der dritten Information notwendige Bedingung für das Ausgeben (33) der ersten Information ist.
Ausführungsbeispiel 8:
   Ein Verfahren nach Ausführungsbeispiel 7, ferner umfassend:
   - Erhalten der zweiten Information von der ersten Vorrichtung (1); und
   - Ausgeben der zweiten Information an die dritte Vorrichtung (3).
Ausführungsbeispiel 9:
   Ein Verfahren nach einem der Ausführungsbeispiele 7 oder 8, ferner umfassend:
   - Ausgeben der dritten Information an die erste Vorrichtung (1), wobei die dritte Information mit der Fachanlage (4) assoziiert ist
Ausführungsbeispiel 10:
   Ein Verfahren nach einem der Ausführungsbeispiele 7 bis 9, ferner umfassend:
   - Erzeugen einer vierten Information, wobei die vierte Information mit der dritten Vorrichtung (3) assoziiert ist und wobei nach Erhalten der vierten Information durch die erste Vorrichtung (1) zumindest eine Information, die zwischen der ersten Vorrichtung (1) und der zweiten Vorrichtung (2) übertragen wird, zumindest auf der vierten Information basiert; und
   - Ausgeben der vierten Information an die erste Vorrichtung (1).
Ausführungsbeispiel 11:
   Ein Verfahren nach einem der Ausführungsbeispiele 7 bis 10, ferner umfassend:
   - Erzeugen einer fünften Information; und
   - Ausgeben der fünften Information an die erste Vorrichtung (1), wobei das Erhalten der fünften Information durch die erste Vorrichtung (1) eine weitere notwendige Bedingung für das Ausgeben (24) der zweiten Information durch die erste Vorrichtung (1) ist.
Ausführungsbeispiel 12:
   Ein Verfahren nach Ausführungsbeispiel 11, ferner umfassend:
   - Erhalten einer sechsten Information von der ersten Vorrichtung (1), wobei die sechste Information auf dem Ergebnis des Authentifizierens (22) der zweiten Vorrichtung (2) basiert, und wobei ein positives Ergebnis des Authentifizierens (22) notwendige Bedingung für das Ausgeben der fünften Information ist.
Ausführungsbeispiel 13:
   Ein Verfahren, beispielsweise durchgeführt an einer dritten Vorrichtung (3), umfassend:
   - Erhalten (41) einer dritten Information von einer Fachanlage (4) oder Erzeugen (41) einer dritten Information; und
   - Ausgeben (42) der dritten Information an eine zweite Vorrichtung (2), wobei das Erhalten (31) der dritten Information durch die zweite Vorrichtung (2) notwendige Bedingung für ein Ausgeben (33) einer ersten Information durch die zweite Vorrichtung (2) an eine erste Vorrichtung (1) ist, wobei ein positives Ergebnis des Authentifizierens (22) der zweiten Vorrichtung (2) durch die erste Vorrichtung (1) basierend zumindest auf der ersten Information eine notwendige Bedingung für ein Ausgeben (24) einer zweiten Information durch die erste Vorrichtung (1) ist, wobei unter Verwendung der zweiten Information die dritte Vorrichtung (3) oder ein Nutzer (5) der dritten Vorrichtung Zugang zu einem oder mehreren Fächern (40) einer Fachanlage (4) erhalten kann.
Ausführungsbeispiel 14:
   Ein Verfahren nach Ausführungsbeispiel 13, ferner umfassend:
   - Erhalten der zweiten Information von der zweiten Vorrichtung (2); und
   - Ausgeben der zweiten Information an die Fachanlage (4).
Ausführungsbeispiel 15:
   Ein Verfahren, durchgeführt an einer Fachanlage (4) in einem System mit der ersten Vorrichtung (1) nach Ausführungsbeispiel 1, der zweiten Vorrichtung (2) nach Ausführungsbeispiel 7 und der dritten Vorrichtung (3) nach Ausführungsbeispiel 13, das Verfahren umfassend:
   - Erhalten (51) der zweiten Information; und
   - Feststellen (52), ob basierend auf der zweiten Information Zugang zu einem oder mehreren Fächern (40) der Fachanlage (4) gewährt werden kann.
Ausführungsbeispiel 16:
   Ein Verfahren nach Ausführungsbeispiel 15, wobei die zweite Information von der dritten Vorrichtung (3) erhalten wird.
Ausführungsbeispiel 17:
   Ein Verfahren nach einem der Ausführungsbeispiele 15 oder 16, ferner umfassend:
   - Erzeugen der dritten Information; und
   - Ausgeben der dritten Information an die dritte Vorrichtung (3).
Ausführungsbeispiel 18:
   Ein Verfahren nach einem der vorherigen Ausführungsbeispiele, wobei die zweite Information mit einem Schlüssel (S) verschlüsselt ist, wobei der Schlüssel (S) in der Fachanlage (4) gespeichert ist, wobei der zweiten (2) und dritten Vorrichtung (3) der Schlüssel (S) nicht bekannt ist.
Ausführungsbeispiel 19:
   Ein Verfahren nach Ausführungsbeispiel 18, sofern mittelbar oder unmittelbar zurückbezogen auf Ausführungsbeispiel 1, ferner umfassend:
   - Erhalten des Schlüssels (S) zur verschlüsselten Kommunikation mit der Fachanlage (4).
Ausführungsbeispiel 20:
   Ein Verfahren nach Ausführungsbeispiel 19, ferner umfassend:
   - Erhalten einer siebten Information, die mit dem Schlüssel (S) verschlüsselt ist;
   - Erzeugen einer achten Information, basierend zumindest auf der mit dem Schlüssel (S) entschlüsselten siebten Information; und
   - Ausgeben der achten Information an die zweite Vorrichtung (2).
Ausführungsbeispiel 21:
   Ein Verfahren nach Ausführungsbeispiel 20, wobei die siebte Information von der zweiten Vorrichtung (2) erhalten wird.
Ausführungsbeispiel 22:
   Ein Verfahren nach Ausführungsbeispiel 18, sofern mittelbar oder unmittelbar zurückbezogen auf Ausführungsbeispiel 7, ferner umfassend:
   - Erhalten, von der dritten Vorrichtung (3), einer siebten Information, die mit dem Schlüssel (S) verschlüsselt ist;
   - Ausgeben der siebten Information an die erste Vorrichtung (1);
   - Erhalten einer achten Information, die zumindest auf der von der ersten Vorrichtung (1) entschlüsselten siebten Information basiert.
Ausführungsbeispiel 23:
   Ein Verfahren nach Ausführungsbeispiel 22, wobei basierend auf der achten Information in der zweiten Vorrichtung (2) eine Statusinformation betreffend eine Belegung von ein oder mehreren Fächern (40) der Fachanlage (4) aktualisiert wird.
Ausführungsbeispiel 24:
   Ein Verfahren nach Ausführungsbeispiel 18, sofern mittelbar oder unmittelbar zurückbezogen auf Ausführungsbeispiel 13, ferner umfassend:
   - Erhalten, von der Fachanlage (4), einer siebten Information, die von der Fachanlage (4) erzeugt wird und mit dem Schlüssel (S) verschlüsselt ist, wobei nachdem die erste Vorrichtung (1) die siebte Information erhält, die erste Vorrichtung (1) basierend zumindest auf der entschlüsselten siebten Information eine achte Information erzeugt und an die zweite Vorrichtung (2) ausgibt; und
   - Ausgeben der siebten Information an die zweite Vorrichtung (2).
Ausführungsbeispiel 25:
   Ein Verfahren nach Ausführungsbeispiel 18, sofern mittelbar oder unmittelbar zurückbezogen auf Ausführungsbeispiel 15, ferner umfassend:
   - Erzeugen einer siebten Information, die mit dem Schlüssel (S) verschlüsselt ist, wobei nachdem die erste Vorrichtung (1) die siebte Information erhält, die erste Vorrichtung (1) basierend auf der entschlüsselten siebten Information eine achte Information erzeugt und an die zweite Vorrichtung (2) ausgibt; und
   - Ausgeben der siebten Information.
Ausführungsbeispiel 26:
   Ein Verfahren nach einem der Ausführungsbeispiele 18 bis 25, wobei der Schlüssel (") von der Fachanlage (4) erzeugt wird.
Ausführungsbeispiel 27:
   Ein Verfahren nach einem der Ausführungsbeispiele 18 bis 26, sofern mittelbar oder unmittelbar zurückbezogen auf einen der Ausführungsbeispiele 3, 9, 13 oder 17, wobei die dritte Information zumindest den Schlüssel (S) enthält
Ausführungsbeispiel 28:
   Ein Verfahren nach einem der Ausführungsbeispiele 18 bis 27, wobei der Schlüssel (S) nur temporär gültig ist
Ausführungsbeispiel 29:
   Ein Verfahren nach einem der Ausführungsbeispiele 27 oder 28, sofern mittelbar oder unmittelbar zurückbezogen auf Ausführungsbeispiel 1, wobei der Schlüssel (S) durch die Fachanlage (4) verschlüsselt ist, ferner umfassend:
   - Erlangen der Schlüssel (S) durch Entschlüsseln des verschlüsselten Schlüssels (S).
Ausführungsbeispiel 30:
   Ein Verfahren nach Ausführungsbeispiel 29, wobei der Schlüssel (S) zweifach asymmetrisch mit zwei öffentlichen Schlüsseln (S1; S2) zweier asymmetrischer Schlüsselpaare (S1, S1`, S2, S2') verschlüsselt ist, wobei in der Fachanlage (4) die zwei öffentlichen Schlüssel (S1; S2) gespeichert sind, wobei an der ersten Vorrichtung (1) der entsprechende private Schlüssel (S1`) des ersten Schlüsselpaars, aber nicht der private Schlüssel (S2') des zweiten Schlüsselpaars bekannt ist, ferner umfassend:
   - Übermitteln des zweifach verschlüsselten Schlüssels (S) an eine fünfte Vorrichtung, die den privaten Schlüssel (S2') des zweiten Schlüsselpaars gespeichert hat;
   - Erhalten, von der fünften Vorrichtung, des einfach verschlüsselten Schlüssels (S), den die fünfte Vorrichtung durch Entschlüsseln des zweifach verschlüsselten Schlüssels (S) unter Verwendung des privaten Schlüssels (S2') des zweiten Schlüsselpaars erlangt hat; und
   - Erlangen des Schlüssels (S) durch Entschlüsseln des einfach verschlüsselten Schlüssels (S) unter Verwendung des privaten Schlüssels (S1`) des ersten Schlüsselpaars.
Ausführungsbeispiel 31:
   Ein Verfahren nach einem der vorherigen Ausführungsbeispiele, sofern mittelbar oder unmittelbar zurückbezogen auf einen der Ausführungsbeispiele 3, 9, 13 oder 17, wobei das Authentifizieren (22) der zweiten Vorrichtung (2) durch die erste Vorrichtung (1) ferner auf der dritten Information basiert
Ausführungsbeispiel 32:
   Ein Verfahren nach einem der Ausführungsbeispiele 25 bis 31, soweit mittelbar oder unmittelbar zurückbezogen auf Ausführungsbeispiel 4 oder Ausführungsbeispiel 10, wobei die Fachanlage (4) eingerichtet ist, einen neuen Schlüssel zu erzeugen, wobei der neue Schlüssel (S_neu) und eine Information, die zumindest auf der vierten Information basiert, insbesondere zusammen, von der zweiten Vorrichtung (2) an die erste Vorrichtung (1) ausgegeben wird, wobei basierend auf dieser Information die erste Vorrichtung (1) den Schlüssel (S) durch den neuen Schlüssel (S_neu) ersetzt
Ausführungsbeispiel 33:
   Eine Vorrichtung oder ein System aus zumindest mehr als einer Vorrichtung, eingerichtet zur Ausführung und/oder Steuerung des Verfahrens nach einem der vorhergehenden Ausführungsbeispiele oder umfassend jeweilige Mittel zur Ausführung und/oder Steuerung der Schritte des Verfahrens nach einem der vorhergehenden Ausführungsbeispiele.
Ausführungsbeispiel 34:
   Ein Computerprogramm, umfassend Programmanweisungen, die einen Prozess zur Ausführung und/oder Steuerung des Verfahrens gemäß einem der Ausführungsbeispiele 1-32 veranlassen, wenn das Computerprogramm auf dem Prozessor läuft

## Patentansprüche

1. Verfahren, beispielsweise durchgeführt an einer ersten Vorrichtung (1), das Verfahren umfassend:
- Erhalten (21) einer ersten Information von einer zweiten Vorrichtung (2), wobei die erste Information mit der zweiten Vorrichtung (2) assoziiert ist;
- Authentifizieren (22) der zweiten Vorrichtung (2) basierend auf zumindest der ersten Information;
- Erzeugen (23) einer zweiten Information, wobei unter Verwendung der zweiten Information eine dritte, von der zweiten Vorrichtung (2) verschiedene Vorrichtung (3) oder ein Nutzer (5) der dritten Vorrichtung (3) Zugang zu einem oder mehreren Fächern (40) einer Fachanlage (4) erhalten kann; und
- Ausgeben (24) der zweiten Information, wobei ein positives Ergebnis des Authentifizierens (22) der zweiten Vorrichtung (2) notwendige Bedingung für das Ausgeben (24) der zweiten Information ist

2. Verfahren nach Anspruch 1, wobei die zweite Information an die zweite Vorrichtung (2) ausgegeben wird und/oder wobei das Verfahren ferner umfasst:
- Erhalten einer dritten Information von der zweiten Vorrichtung (2), wobei die dritte Information mit der Fachanlage (4) assoziiert ist.

3. Verfahren nach einem der vorherigen Ansprüche, ferner umfassend zumindest eine der folgenden Optionen:
- Erhalten einer vierten Information von der zweiten Vorrichtung (2), wobei die vierte Information mit der dritten Vorrichtung (3) assoziiert ist und wobei nach Erhalten der vierten Information zumindest eine Information, die zwischen der ersten Vorrichtung (1) und der zweiten Vorrichtung (2) übertragen wird, zumindest auf der vierten Information basiert; und/oder
- Erhalten einer fünften Information von der zweiten Vorrichtung (2), wobei das Erhalten der fünften Information eine weitere notwendige Bedingung für das Ausgeben (24) der zweiten Information ist

4. Verfahren, beispielsweise durchgeführt an einer zweiten Vorrichtung (2), umfassend:
- Erhalten (31) einer dritten Information von einer dritten Vorrichtung (3);
- Erzeugen (32) einer ersten Information, wobei die erste Information mit der zweiten Vorrichtung (2) assoziiert ist; und
- Ausgeben (33) der ersten Information an eine erste Vorrichtung (1), um der ersten Vorrichtung (1) ein Authentifizieren (22) der zweiten Vorrichtung (2) basierend auf zumindest der ersten Information zu ermöglichen, wobei ein positives Ergebnis des Authentifizierens notwendige Bedingung für ein Ausgeben (24) einer zweiten Information von der ersten Vorrichtung (1) ist, wobei unter Verwendung der zweiten Information eine dritte Vorrichtung (3) oder ein Nutzer (5) der dritten Vorrichtung (3) Zugang zu einem oder mehreren Fächern (40) einer Fachanlage (4) erhalten kann, und wobei das Erhalten (31) der dritten Information notwendige Bedingung für das Ausgeben (33) der ersten Information ist.

5. Verfahren nach Anspruch 4, ferner umfassend zumindest eine der Optionen A und B:
Option A:
- Erhalten der zweiten Information von der ersten Vorrichtung (1); und
- Ausgeben der zweiten Information an die dritte Vorrichtung (3).
Option B:
- Ausgeben der dritten Information an die erste Vorrichtung (1), wobei die dritte Information mit der Fachanlage (4) assoziiert ist.

6. Verfahren nach einem der Ansprüche 4 oder 5, ferner umfassend:
- Erzeugen einer vierten Information, wobei die vierte Information mit der dritten Vorrichtung (3) assoziiert ist und wobei nach Erhalten der vierten Information durch die erste Vorrichtung (1) zumindest eine Information, die zwischen der ersten Vorrichtung (1) und der zweiten Vorrichtung (2) übertragen wird, zumindest auf der vierten Information basiert; und
- Ausgeben der vierten Information an die erste Vorrichtung (1).

7. Verfahren nach einem der Ansprüche 4 bis 6, ferner umfassend:
- Erzeugen einer fünften Information; und
- Ausgeben der fünften Information an die erste Vorrichtung (1), wobei das Erhalten der fünften Information durch die erste Vorrichtung (1) eine weitere notwendige Bedingung für das Ausgeben (24) der zweiten Information durch die erste Vorrichtung (1) ist, wobei das Verfahren optional ferner umfasst:
- Erhalten einer sechsten Information von der ersten Vorrichtung (1), wobei die sechste Information auf dem Ergebnis des Authentifizierens (22) der zweiten Vorrichtung (2) basiert, und wobei ein positives Ergebnis des Authentifizierens (22) notwendige Bedingung für das Ausgeben der fünften Information ist.

8. Verfahren, beispielsweise durchgeführt an einer dritten Vorrichtung (3), umfassend:
- Erhalten (41) einer dritten Information von einer Fachanlage (4) oder Erzeugen (41) einer dritten Information; und
- Ausgeben (42) der dritten Information an eine zweite Vorrichtung (2), wobei das Erhalten (31) der dritten Information durch die zweite Vorrichtung (2) notwendige Bedingung für ein Ausgeben (33) einer ersten Information durch die zweite Vorrichtung (2) an eine erste Vorrichtung (1) ist, wobei ein positives Ergebnis des Authentifizierens (22) der zweiten Vorrichtung (2) durch die erste Vorrichtung (1) basierend zumindest auf der ersten Information eine notwendige Bedingung für ein Ausgeben (24) einer zweiten Information durch die erste Vorrichtung (1) ist, wobei unter Verwendung der zweiten Information die dritte Vorrichtung (3) oder ein Nutzer (5) der dritten Vorrichtung Zugang zu einem oder mehreren Fächern (40) einer Fachanlage (4) erhalten kann.

9. Verfahren nach Anspruch 8, ferner umfassend:
- Erhalten der zweiten Information von der zweiten Vorrichtung (2); und
- Ausgeben der zweiten Information an die Fachanlage (4).

10. Verfahren, durchgeführt an einer Fachanlage (4) in einem System mit der ersten Vorrichtung (1) nach Anspruch 1, der zweiten Vorrichtung (2) nach Anspruch 4 und der dritten Vorrichtung (3) nach Anspruch 8, das Verfahren umfassend:
- Erhalten (51) der zweiten Information; und
- Feststellen (52), ob basierend auf der zweiten Information Zugang zu einem oder mehreren Fächern (40) der Fachanlage (4) gewährt werden kann.

11. Verfahren nach Anspruch 10, wobei die zweite Information von der dritten Vorrichtung (3) erhalten wird und/oder wobei das Verfahren ferner umfasst:
- Erzeugen der dritten Information; und
- Ausgeben der dritten Information an die dritte Vorrichtung (3).

12. Verfahren nach einem der vorherigen Ansprüche, wobei die zweite Information mit einem Schlüssel (S) verschlüsselt ist, wobei der Schlüssel (S) in der Fachanlage (4) gespeichert ist, wobei der zweiten (2) und dritten Vorrichtung (3) der Schlüssel (S) nicht bekannt ist

13. Verfahren nach Anspruch 12 gemäß einer oder mehrerer der folgenden Optionen:
Option A:
das Verfahren nach Anspruch 12, sofern mittelbar oder unmittelbar zurückbezogen auf Anspruch 1, ferner umfassend:
- Erhalten des Schlüssels (S) zur verschlüsselten Kommunikation mit der Fachanlage (4);
Option B:
das Verfahren nach Anspruch 12, sofern mittelbar oder unmittelbar zurückbezogen auf Anspruch 1, ferner umfassend:
- Erhalten einer siebten Information, die mit dem Schlüssel (S) verschlüsselt ist;
- Erzeugen einer achten Information, basierend zumindest auf der mit dem Schlüssel (S) entschlüsselten siebten Information; und
- Ausgeben der achten Information an die zweite Vorrichtung (2);
Option C:
das Verfahren nach Anspruch 12, sofern mittelbar oder unmittelbar zurückbezogen auf Anspruch 4, ferner umfassend:
- Erhalten, von der dritten Vorrichtung (3), einer siebten Information, die mit dem Schlüssel (S) verschlüsselt ist;
- Ausgeben der siebten Information an die erste Vorrichtung (1);
- Erhalten einer achten Information, die zumindest auf der von der ersten Vorrichtung (1) entschlüsselten siebten Information basiert, wobei basierend auf der achten Information in der zweiten Vorrichtung (2) eine Statusinformation betreffend eine Belegung von ein oder mehreren Fächern (40) der Fachanlage (4) aktualisiert wird;
Option D:
das Verfahren nach Anspruch 12, sofern mittelbar oder unmittelbar zurückbezogen auf Anspruch 8, ferner umfassend:
- Erhalten, von der Fachanlage (4), einer siebten Information, die von der Fachanlage (4) erzeugt wird und mit dem Schlüssel (S) verschlüsselt ist, wobei nachdem die erste Vorrichtung (1) die siebte Information erhält, die erste Vorrichtung (1) basierend zumindest auf der entschlüsselten siebten Information eine achte Information erzeugt und an die zweite Vorrichtung (2) ausgibt; und
- Ausgeben der siebten Information an die zweite Vorrichtung (2);
Option E:
das Verfahren nach Anspruch 12, sofern mittelbar oder unmittelbar zurückbezogen auf Anspruch 10, ferner umfassend:
- Erzeugen einer siebten Information, die mit dem Schlüssel (S) verschlüsselt ist, wobei nachdem die erste Vorrichtung (1) die siebte Information erhält, die erste Vorrichtung (1) basierend auf der entschlüsselten siebten Information eine achte Information erzeugt und an die zweite Vorrichtung (2) ausgibt; und
- Ausgeben der siebten Information.

14. Verfahren nach einem der Ansprüche 12 oder 13, wobei der Schlüssel (S) von der Fachanlage (4) erzeugt wird und/oder der Schlüssel (S) nur temporär gültig ist

15. Verfahren nach einem der Ansprüche 12 bis 14, sofern mittelbar oder unmittelbar zurückbezogen auf einen der Ansprüche 2, 5, 8 oder 11, wobei die dritte Information zumindest den Schlüssel (S) enthält und/oder wobei das Authentifizieren (22) der zweiten Vorrichtung (2) durch die erste Vorrichtung (1) ferner auf der dritten Information basiert

16. Verfahren nach Anspruch 15, sofern mittelbar oder unmittelbar zurückbezogen auf Anspruch 1, wobei der Schlüssel (S) durch die Fachanlage (4) verschlüsselt ist, ferner umfassend:
- Erlangen des Schlüssels (S) durch Entschlüsseln des verschlüsselten Schlüssels (S).

17. Verfahren nach Anspruch 16, wobei der Schlüssel (S) zweifach asymmetrisch mit zwei öffentlichen Schlüsseln (S1; S2) zweier asymmetrischer Schlüsselpaare (S1, S1`; S2, S2') verschlüsselt ist, wobei in der Fachanlage (4) die zwei öffentlichen Schlüssel (S1; S2) gespeichert sind, wobei an der ersten Vorrichtung (1) der entsprechende private Schlüssel (S1`) des ersten Schlüsselpaars, aber nicht der private Schlüssel (S2') des zweiten Schlüsselpaars bekannt ist, ferner umfassend:
- Übermitteln des zweifach verschlüsselten Schlüssels (S) an eine fünfte Vorrichtung, die den privaten Schlüssel (S2') des zweiten Schlüsselpaars gespeichert hat;
- Erhalten, von der fünften Vorrichtung, des einfach verschlüsselten Schlüssels (S), den die fünfte Vorrichtung durch Entschlüsseln des zweifach verschlüsselten Schlüssels (S) unter Verwendung des privaten Schlüssels (S2') des zweiten Schlüsselpaars erlangt hat; und
- Erlangen des Schlüssels (S) durch Entschlüsseln des einfach verschlüsselten Schlüssels (S) unter Verwendung des privaten Schlüssels (S1`) des ersten Schlüsselpaars.

18. Verfahren nach einem der Ansprüche 10 bis 17, soweit mittelbar oder unmittelbar zurückbezogen auf Anspruch 3 oder Anspruch 6, wobei die Fachanlage (4) eingerichtet ist, einen neuen Schlüssel zu erzeugen, wobei der neue Schlüssel (S_neu) und eine Information, die zumindest auf der vierten Information basiert, insbesondere zusammen, von der zweiten Vorrichtung (2) an die erste Vorrichtung (1) ausgegeben wird, wobei basierend auf dieser Information die erste Vorrichtung (1) den Schlüssel (S) durch den neuen Schlüssel (S_neu) ersetzt
